# EUROPEAN PATENT APPLICATION

(11) **EP 4 529 260 A1**
(43) Date of publication of application: **26.03.2025**
(21) Application number: 22941945.2
(22) Date of filing: 16.05.2022
(51) Int. Cl.: H04W 24/10

(54) **REPORTING METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/093163
(87) International publication number: WO 2023/220901

(57) **Abstract**

The present invention belongs to the technical field of communications. Provided are a reporting method and apparatus, and a device and a storage medium. The method comprises: in response to triggering a radio link failure report (RLF-report), reporting the RLF-report to a network-side device, wherein the RLF-report carries received signal strength indication (RSSI) information and/or channel occupancy (CO) information (101). The present invention provides a processing method for "reporting", so as to provide RSSI information and/or CO information, thereby improving the accuracy and convenience of channel condition confirmation.

## Description

### FIELD

The present invention generally relates to the field of communication technology, and more particularly, to a reporting method and apparatus, a device and a storage medium.

### BACKGROUND

In a communication system, for a 5th generation (5G) mobile communication technology air interface working in an unlicensed frequency band, multiple interferences on a same frequency point exist, and a terminal device may measure reference signal received power (RSRP) information or reference signal received quality (RSRQ) information. However, the RSRP information or the RSRQ information alone cannot reflect a channel condition. Therefore, there is an urgent need for a "reporting" method to provide received signal strength indicator (RSSI, rssi-Result) information and/or channel occupancy (CO) information to improve an accuracy and convenience for channel status confirmation.

### SUMMARY

The present invention provides a reporting method and apparatus, a device and a storage medium to provide RSSI information and/or CO information to improve an accuracy and convenience for channel status confirmation.

In an aspect, an embodiment of the present invention provides a reporting method, which is performed by a terminal device and includes: reporting a radio link failure report (RLF-report) to a network-side device in response to triggering the RLF-report, in which the RLF-report carries received signal strength indicator (RSSI) information and/or channel occupancy (CO) information.

Optionally, in an embodiment of the present invention, reporting the RLF-report to the network-side device in response to triggering the RLF-report includes: recording the RSSI information and/or the CO information to a radio link failure report parameter (VarRLF-report) variable in response to triggering recording failure information to the VarRLF-report variable; and reporting the RLF-report to the network-side device in response to triggering the RLF-report, in which the RLF-report carries the RSSI information and/or the CO information recorded in the VarRLF-report variable.

Optionally, in an embodiment of the present invention, a triggering condition for triggering recording the failure information to the VarRLF-report variable includes at least one of: a handover failure; or a radio link failure (RLF).

Optionally, in an embodiment of the present invention, a triggering condition for reporting the RLF-report includes at least one of: a master cell group media access control (MCG MAC) random access; a primary cell (PCell) beam recovery failure; a PCell T310 expiry; a PCell T312 expiry; a master cell group radio link control (MCG RLC) reaching a maximum number of retransmissions; a consistent uplink listen before talk (LBT) detection failure occurred on an MCG MAC; or a backhaul radio link failure indication.

Optionally, in an embodiment of the present invention, reporting the RLF-report to the network-side device includes: reporting the RLF-report to the network-side device, in which an RSSI measurement result information element (MeasResultForRSSI IE) in the RLF-report carries the RSSI information and/or the CO information.

Optionally, in an embodiment of the present invention, the method further includes: recording a measurement identifier (measId) in a new radio RLF-report IE (NR-RLF-report IE) in an RLF-report IE in a case that it is determined that a report configuration (reportConfig) associated with the measId is configured with a configuration for measuring an RSSI report (MeasRSSI-reportConfig) and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channel occupancy threshold (channelOccupancyThreshold) among all sampling values received during the reportInterval before the terminal device detects the failure moment.

Optionally, in an embodiment of the present invention, the method further includes at least one of: recording a measId and RSSI information and/or CO information associated with an MCG in response to triggering the RLF-report; or recording a measId and RSSI information and/or CO information associated with a secondary cell group (SCG) in response to triggering the RLF-report.

Optionally, in an embodiment of the present invention, the method further includes: reporting the RLF-report to the network-side device. The RLF-report carries network capability information, and the network capability information is used to indicate a capability of the terminal device to support recording and reporting the RSSI information and/or the CO information in the RLF-report.

In another aspect, an embodiment of the present invention provides a reporting method, which is performed by a terminal device and includes: reporting failure information to a network-side device in response to triggering failure information reporting, in which the failure information carries RSSI information and/or CO information.

Optionally, in an embodiment of the present invention, reporting the failure information to the network-side device in response to triggering the failure information reporting includes: reporting master cell group failure information (MCGFailureInformation) to the network-side device in response to triggering MCGFailureInformation reporting, in which the MCGFailureInformation carries the RSSI information and/or the CO information.

Optionally, in an embodiment of the present invention, a triggering condition for reporting the MCGFailureInformation includes at least one of: an MCG MAC random access; a PCell beam recovery failure; a PCell T310 expiry; a PCell T312 expiry; an MCG RLC reaching a maximum number of retransmissions; a consistent uplink LBT detection failure occurred on an MCG MAC; or a backhaul radio link failure indication.

Optionally, in an embodiment of the present invention, the method further includes at least one of: recording a measId and RSSI information and/or CO information associated with an MCG in response to triggering the MCGFailureInformation reporting; or recording a measId and RSSI information and/or CO information associated with an SCG in response to triggering the MCGFailureInformation reporting.

Optionally, in an embodiment of the present invention, the method further includes: reporting the MCGFailureInformation to the network-side device, in which the MCGFailureInformation carries network capability information, and the network capability information is used to indicate a capability of the terminal device to support recording and reporting the RSSI information and/or the CO information in the MCGFailureInformation.

Optionally, in an embodiment of the present invention, reporting the failure information to the network-side device in response to triggering the failure information reporting includes: reporting secondary cell group failure information (SCGFailureInformation) to the network-side device in response to triggering SCGFailureInformation reporting, in which the SCGFailureInformation carries the RSSI information and/or the CO information.

Optionally, in an embodiment of the present invention, a triggering condition for reporting the SCGFailureInformation includes at least one of: a PCell T310 expiry; a PCell T312 expiry; a secondary cell group media access control (SCG MAC) random access; a secondary cell group radio link control (SCG RLC) reaching a maximum number of retransmissions; a consistent uplink LBT detection failure occurred on a secondary cell group; a backhaul radio link failure indication in the secondary cell group; a reconfiguration of a secondary cell group synchronization failure; or detecting a beam failure of a primary secondary cell (PSCell) when the secondary cell group is deactivated.

Optionally, in an embodiment of the present invention, the method further includes at least one of: recording a measId and RSSI information and/or CO information associated with an MCG in response to triggering the SCGFailureInformation reporting; or recording a measId and RSSI information and/or CO information associated with an SCG in response to triggering the SCGFailureInformation reporting.

Optionally, in an embodiment of the present invention, the method further includes: reporting the SCGFailureInformation to the network-side device, in which the SCGFailureInformation carries network capability information, and the network capability information is used to indicate a capability of the terminal device to support recording and reporting the RSSI information and/or the CO information in the SCGFailureInformation.

Optionally, in an embodiment of the present invention, reporting the failure information to the network-side device in response to triggering the failure information reporting includes: reporting failure information (FailureInformation) to the network-side device in response to triggering FailureInformation reporting, in which the FailureInformation carries the RSSI information and/or the CO information.

Optionally, in an embodiment of the present invention, a triggering condition for reporting the failure information includes at least one of: detecting an RLC bearer failure; or detecting a dual active protocol stack (DAPS) handover failure.

Optionally, in an embodiment of the present invention, the method further includes at least one of: recording a measId and RSSI information and/or CO information associated with an MCG in response to triggering the FailureInformation reporting; or recording a measId and RSSI information and/or CO information associated with an SCG in response to triggering the FailureInformation reporting.

Optionally, in an embodiment of the present invention, the method further includes: reporting the FailureInformation to the network-side device, in which the FailureInformation carries network capability information, and the network capability information is used to indicate a capability of the terminal device to support recording and reporting the RSSI information and/or the CO information in the FailureInformation.

Optionally, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

In yet another aspect, an embodiment of the present invention provides a reporting method, which is performed by a terminal device and includes: reporting a target report to a network-side device in response to triggering recording target report reporting, in which the target report carries RSSI information and/or CO information, and the target report includes at least one of a successful handover report, a random access report (RA-report), or a successful primary secondary cell (PScell) addition or change report.

Optionally, in an embodiment of the present invention, reporting the target report to the network-side device in response to triggering recording the target report reporting includes: reporting the successful handover report to the network-side device in response to triggering recording the successful handover report, in which the successful handover report carries the RSSI information and/or the CO information.

Optionally, in an embodiment of the present invention, a triggering condition for reporting the successful handover report to the network-side device includes at least one of: a first ratio of a T304 elapsed time to a first configured time exceeding a first threshold; a second ratio of a T310 elapsed time to a second configured time exceeding a second threshold; a third ratio of a T312 elapsed time to a third configured time exceeding a third threshold; or an RLF occurred in a source cell during a dual active protocol stack (DAPS) handover.

Optionally, in an embodiment of the present invention, the method further includes at least one of: recording a measId and RSSI information and/or CO information associated with an MCG in response to triggering recording the successful handover report; or recording a measId and RSSI information and/or CO information associated with an SCG in response to triggering recording the successful handover report.

Optionally, in an embodiment of the present invention, the method further includes: reporting the successful handover report to the network-side device, in which the successful handover report carries network capability information, and the network capability information is used to indicate a capability of the terminal device to support recording and reporting the RSSI information and/or the CO information in the successful handover report.

Optionally, in an embodiment of the present invention, reporting the target report to the network-side device in response to triggering recording the target report reporting includes: reporting the RA-report to the network-side device in response to triggering recording the RA-report, in which the RA-report carries the RSSI information and/or the CO information.

Optionally, in an embodiment of the present invention, a triggering condition for reporting the random access report (RA-report) to the network-side device includes at least one of: successfully executing a 4-step or 2-step random access; or successfully completing or failing an on-demand system information (SI) acquisition process.

Optionally, in an embodiment of the present invention, the method further includes at least one of: recording a measId and RSSI information and/or CO information associated with a first cell group in response to triggering recording the RA-report, in which the first cell group is a cell group associated with a random access, and the first cell group includes an MCG or an SCG; or recording a measId and RSSI information and/or CO information of a second cell group in response to triggering recording the RA-report, in which the second cell group is a cell group associated with a random access and is different from the first cell group, and the second cell group includes an MCG or an SCG.

Optionally, in an embodiment of the present invention, the method further includes: reporting the RA-report to the network-side device, in which the RA-report carries network capability information, and the network capability information is used to indicate a capability of the terminal device to support recording and reporting the RSSI information and/or the CO information in the RA-report.

Optionally, in an embodiment of the present invention, reporting the target report to the network-side device in response to triggering recording the target report reporting includes: reporting the successful PScell addition or change report to the network-side device in response to triggering recording the successful PScell addition or change report, in which the successful PScell addition or change report carries the RSSI information and/or the CO information.

Optionally, in an embodiment of the present invention, a triggering condition for reporting the successful primary secondary cell (PScell) addition or change report to the network-side device includes at least one of: a fourth ratio of a T304 elapsed time of PScell to a fourth configured time exceeding a fourth threshold; a fifth ratio of a T310 elapsed time of PScell to a fifth configured time exceeding a fifth threshold; or a sixth ratio of a T312 elapsed time of PScell to a sixth configured time exceeding a sixth threshold.

Optionally, in an embodiment of the present invention, the method further includes at least one of: recording a measId and RSSI information and/or CO information associated with an MCG in response to triggering recording the successful PScell addition or change report; or recording a measId and RSSI information and/or CO information associated with an SCG in response to triggering recording the successful PScell addition or change report.

Optionally, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

Optionally, in an embodiment of the present invention, the method further includes: reporting the successful PScell addition or change report to the network-side device, in which the successful PScell addition or change report carries network capability information, and the network capability information is used to indicate a capability of the terminal device to support recording and reporting the RSSI information and/or the CO information in the successful PScell addition or change report.

In yet another aspect, an embodiment of the present invention provides a reporting method, which is performed by a network-side device and includes: receiving an RLF-report reported by a terminal device, in which the RLF-report carries RSSI information and/or CO information.

Optionally, in an embodiment of the present invention, the RLF-report carries a VarRLF-report variable, and the VarRLF-report variable carries the RSSI information and/or the CO information.

Optionally, in an embodiment of the present invention, the RLF-report carries network capability information, and the network capability information is used to indicate a capability of the terminal device to support recording and reporting the RSSI information and/or the CO information in the RLF-report.

In yet another aspect, an embodiment of the present invention provides a reporting method, which is performed by a network-side device and includes: receiving failure information reported by a terminal device, in which the failure information carries RSSI information and/or CO information.

Optionally, in an embodiment of the present invention, receiving the failure information reported by the terminal device includes: receiving MCGFailureInformation reported by the terminal device, in which the MCGFailureInformation carries the RSSI information and/or the CO information.

Optionally, in an embodiment of the present invention, the MCGFailureInformation carries network capability information, and the network capability information is used to indicate a capability of the terminal device to support recording and reporting the RSSI information and/or the CO information in the MCGFailureInformation.

Optionally, in an embodiment of the present invention, receiving the failure information reported by the terminal device includes: receiving SCGFailureInformation reported by the terminal device, in which the SCGFailureInformation carries the RSSI information and/or the CO information.

Optionally, in an embodiment of the present invention, the SCGFailureInformation carries network capability information, and the network capability information is used to indicate a capability of the terminal device to support recording and reporting the RSSI information and/or the CO information in the SCGFailureInformation.

Optionally, in an embodiment of the present invention, receiving the failure information reported by the terminal device includes: receiving FailureInformation reported by the terminal device, in which the FailureInformation carries the RSSI information and/or the CO information.

Optionally, in an embodiment of the present invention, the FailureInformation carries network capability information, and the network capability information is used to indicate a capability of the terminal device to support recording and reporting the RSSI information and/or the CO information in the FailureInformation.

In yet another aspect, an embodiment of the present invention provides a reporting method, which is performed by a network-side device and includes: receiving a target report reported by a terminal device, in which the target report carries RSSI information and/or CO information, and the target report includes at least one of a successful handover report, a random access report (RA-report), or a successful primary secondary cell (PScell) addition or change report.

Optionally, in an embodiment of the present invention, the target report carries network capability information, and the network capability information is used to indicate a capability of the terminal device to support recording and reporting the RSSI information and/or the CO information in the target report.

In yet another aspect, an embodiment of the present invention provides a reporting apparatus, which includes: a reporting module configured to report a radio link failure report (RLF-report) to a network-side device in response to triggering the RLF-report, in which the RLF-report carries received signal strength indicator (RSSI) information and/or channel occupancy (CO) information.

In yet another aspect, an embodiment of the present invention provides a reporting apparatus, which includes: a reporting module configured to report failure information to a network-side device in response to triggering failure information reporting, in which the failure information carries RSSI information and/or CO information.

In yet another aspect, an embodiment of the present invention provides a reporting apparatus, which includes: a reporting module configured to report a target report to a network-side device in response to triggering recording target report reporting, in which the target report carries RSSI information and/or CO information, and the target report includes at least one of a successful handover report, a random access report (RA-report) or a successful primary secondary cell (PScell) addition or change report.

In yet another aspect, an embodiment of the present invention provides a reporting apparatus, which includes: a receiving module configured to receive an RLF-report reported by a terminal device, in which the RLF-report carries RSSI information and/or CO information.

In yet another aspect, an embodiment of the present invention provides a reporting apparatus, which includes: a receiving module configured to receive failure information reported by a terminal device, in which the failure information carries RSSI information and/or CO information.

In yet another aspect, an embodiment of the present invention provides a reporting apparatus, which includes: a receiving module configured to receive a target report reported by a terminal device, in which the target report carries RSSI information and/or CO information, and the target report includes at least one of a successful handover report, a random access report (RA-report), or a successful primary secondary cell (PScell) addition or change report.

In yet another aspect, an embodiment of the present invention provides a terminal device, which includes: a processor, and a memory having stored therein a computer program. The processor is configured to execute the computer program stored in the memory to cause the device to perform the method provided in an embodiment of the one aspect.

In yet another aspect, an embodiment of the present invention provides a terminal device, which includes: a processor, and a memory having stored therein a computer program. The processor is configured to execute the computer program stored in the memory to cause the device to perform the method provided in an embodiment of another aspect.

In yet another aspect, an embodiment of the present invention provides a terminal device, which includes: a processor, and a memory having stored therein a computer program. The processor is configured to execute the computer program stored in the memory to cause the device to perform the method provided in an embodiment of yet another aspect.

In yet another aspect, an embodiment of the present invention provides a network-side device, which includes: a processor, and a memory having stored therein a computer program. The processor is configured to execute the computer program stored in the memory to cause the device to perform the method provided in an embodiment of yet another aspect.

In yet another aspect, an embodiment of the present invention provides a network-side device, which includes: a processor, and a memory having stored therein a computer program. The processor is configured to execute the computer program stored in the memory to cause the device to perform the method provided in an embodiment of yet another aspect.

In yet another aspect, an embodiment of the present invention provides a network-side device, which includes: a processor, and a memory having stored therein a computer program. The processor is configured to execute the computer program stored in the memory to cause the device to perform the method provided in an embodiment of yet another aspect.

In yet another aspect, an embodiment of the present invention provides a communication device, which includes: a processor, and an interface circuit. The interface circuit is configured to receive code instructions and transmit them to the processor, and the processor is configured to run the code instructions to perform the method provided in an embodiment of the one aspect.

In yet another aspect, an embodiment of the present invention provides a communication device, which includes: a processor, and an interface circuit. The interface circuit is configured to receive code instructions and transmit them to the processor, and the processor is configured to run the code instructions to perform the method provided in an embodiment of another aspect.

In yet another aspect, an embodiment of the present invention provides a communication device, which includes: a processor, and an interface circuit. The interface circuit is configured to receive code instructions and transmit them to the processor, and the processor is configured to run the code instructions to perform the method provided in an embodiment of yet another aspect.

In yet another aspect, an embodiment of the present invention provides a communication device, which includes: a processor, and an interface circuit. The interface circuit is configured to receive code instructions and transmit them to the processor, and the processor is configured to run the code instructions to perform the method provided in an embodiment of yet another aspect.

In yet another aspect, an embodiment of the present invention provides a communication device, which includes: a processor, and an interface circuit. The interface circuit is configured to receive code instructions and transmit them to the processor, and the processor is configured to run the code instructions to perform the method provided in an embodiment of yet another aspect.

In yet another aspect, an embodiment of the present invention provides a communication device, which includes: a processor, and an interface circuit. The interface circuit is configured to receive code instructions and transmit them to the processor, and the processor is configured to run the code instructions to perform the method provided in an embodiment of yet another aspect.

In yet another aspect, an embodiment of the present invention provides a computer-readable storage medium, which is configured to store instructions that, when executed, cause the method provided in an embodiment of the one aspect to be implemented.

In yet another aspect, an embodiment of the present invention provides a computer-readable storage medium, which is configured to store instructions that, when executed, cause the method provided in an embodiment of another aspect to be implemented.

In yet another aspect, an embodiment of the present invention provides a computer-readable storage medium, which is configured to store instructions that, when executed, cause the method provided in an embodiment of yet another aspect to be implemented.

In yet another aspect, an embodiment of the present invention provides a computer-readable storage medium, which is configured to store instructions that, when executed, cause the method provided in an embodiment of yet another aspect to be implemented.

In yet another aspect, an embodiment of the present invention provides a computer-readable storage medium, which is configured to store instructions that, when executed, cause the method provided in an embodiment of yet another aspect to be implemented.

In summary, in the embodiments of the present invention, the RLF-report is reported to the network-side device in response to triggering the RLF-report. The RLF-report carries the received signal strength indicator (RSSI) information and/or the channel occupancy (CO) information. In the embodiments of the present invention, the RSSI information and/or the CO information may be reported to the network-side device in response to triggering the RLF-report, so that the network-side device determines a channel condition based on the RSSI information and/or the CO information, thereby avoiding a situation where the channel condition cannot be determined. The present invention provides a processing method for a "reporting" situation to provide the RSSI information and/or the CO information to improve the accuracy and the convenience for the channel condition confirmation.

### BRIEF DESCRIPTION OF THE DRAWINGS

The above and/or additional aspects and advantages of the present invention will become apparent and more readily appreciated from the following descriptions made with reference to the accompanying drawings, in which:
FIG. 1 is a schematic flowchart of a reporting method provided in an embodiment of the present invention;
FIG. 2 is a schematic flowchart of a reporting method provided in another embodiment of the present invention;
FIG. 3 is a schematic flowchart of a reporting method provided in yet another embodiment of the present invention;
FIG. 4 is a schematic flowchart of a reporting method provided in a further embodiment of the present invention;
FIG. 5 is a schematic flowchart of a reporting method provided in a further embodiment of the present invention;
FIG. 6 is a schematic flowchart of a reporting method provided in a further embodiment of the present invention;
FIG. 7 is a schematic flowchart of a reporting method provided in a further embodiment of the present invention;
FIG. 8 is a schematic flowchart of a reporting method provided in a further embodiment of the present invention;
FIG. 9 is a schematic flowchart of a reporting method provided in a further embodiment of the present invention;
FIG. 10 is a schematic flowchart of a reporting method provided in a further embodiment of the present invention;
FIG. 11 is a schematic flowchart of a reporting method provided in a further embodiment of the present invention;
FIG. 12 is a schematic flowchart of a reporting method provided in a further embodiment of the present invention;
FIG. 13 is a schematic flowchart of a reporting method provided in a further embodiment of the present invention;
FIG. 14 is a schematic flowchart of a reporting method provided in a further embodiment of the present invention;
FIG. 15 is a schematic flowchart of a reporting method provided in a further embodiment of the present invention;
FIG. 16 is a schematic flowchart of a reporting method provided in a further embodiment of the present invention;
FIG. 17 is a schematic flowchart of a reporting method provided in a further embodiment of the present invention;
FIG. 18 is a schematic flowchart of a reporting method provided in a further embodiment of the present invention;
FIG. 19 is a schematic flowchart of a reporting method provided in a further embodiment of the present invention;
FIG. 20 is a schematic flowchart of a reporting method provided in a further embodiment of the present invention;
FIG. 21 is a schematic flowchart of a reporting method provided in a further embodiment of the present invention;
FIG. 22 is a schematic flowchart of a reporting method provided in a further embodiment of the present invention;
FIG. 23 is a schematic block diagram of a reporting apparatus provided in an embodiment of the present invention;
FIG. 24 is a schematic block diagram of a reporting apparatus provided in another embodiment of the present invention;
FIG. 25 is a schematic block diagram of a reporting apparatus provided in yet another embodiment of the present invention;
FIG. 26 is a schematic block diagram of a reporting apparatus provided in a further embodiment of the present invention;
FIG. 27 is a schematic block diagram of a reporting apparatus provided in a further embodiment of the present invention;
FIG. 28 is a schematic block diagram of a reporting apparatus provided in a further embodiment of the present invention;
FIG. 29 is a block diagram of a terminal device provided in an embodiment of the present invention;
FIG. 30 is a block diagram of a network-side device provided in an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. Instead, they are merely examples of devices and methods consistent with some aspects of embodiments of the present invention as recited in the appended claims.

Terms used herein in embodiments of the present invention are only for the purpose of describing specific embodiments, but should not be construed to limit embodiments of the present invention. As used in embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

A network element or network function involved in embodiments of the present invention may be implemented by an independent hardware device or by a software in the hardware device, which is not limited in embodiments of the present invention.

A reporting method and apparatus, a device and a storage medium provided by embodiments of the present invention will be introduced in detail below with reference to the accompanying drawings.

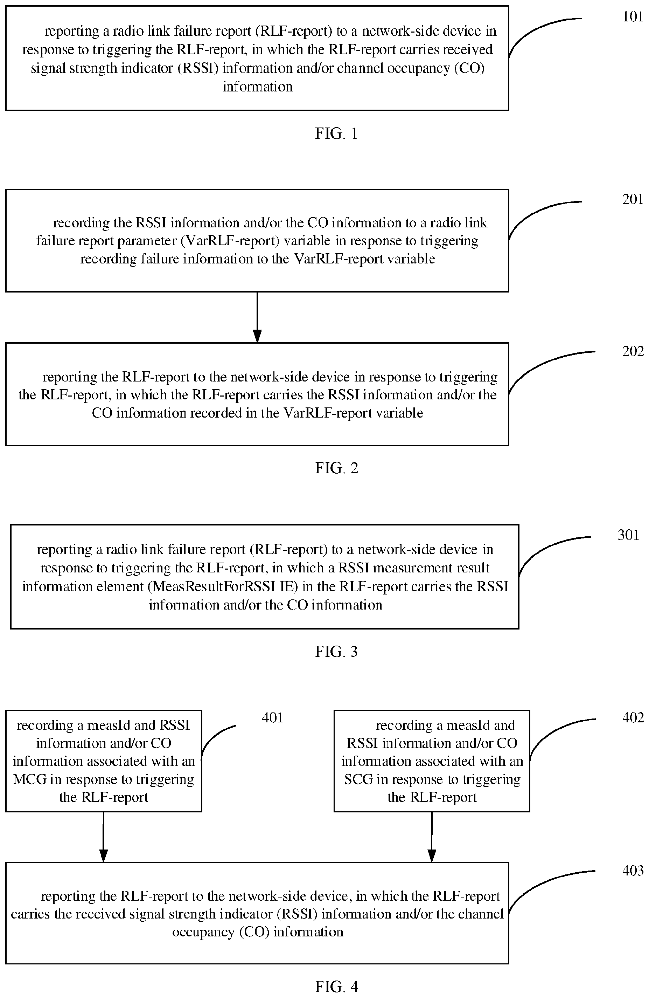

FIG. 1 is a schematic flowchart of a reporting method provided in an embodiment of the present invention. The method is performed by a terminal device. As shown in FIG. 1, the method may include a following step.

In step 101, a radio link failure report (RLF-report) is reported to a network-side device in response to triggering the RLF-report. The RLF-report carries received signal strength indicator (RSSI) information and/or channel occupancy (CO) information.

It should be noted that, in an embodiment of the present invention, the terminal device may refer to a device that provides voice and/or data connectivity to a user. The terminal device may communicate with one or more core networks via a radio access network (RAN). The terminal device may be an Internet of Things terminal, such as a sensor device, a mobile phone (or referred to as a "cellular" phone), and a computer with an Internet of Things terminal. For example, it may be a fixed, portable, pocket-sized, handheld, built-in computer or vehicle-mounted apparatus. For example, it may be a station (STA), a subscriber unit, a subscriber station, a mobile station, a mobile, a remote station, an access point, a remote terminal, an access terminal, a user terminal or a user agent. Alternatively, the terminal device may also be a device of an unmanned aerial vehicle. Alternatively, the terminal device may also be a vehicle-mounted device, for example, a driving computer with a wireless communication function, or a wireless terminal externally connected with a driving computer. Alternatively, the terminal device may also be a roadside device, for example, a street lamp, a signal lamp or other roadside devices with a wireless communication function.

In an embodiment of the present invention, reporting the RLF-report to the network-side device in response to triggering the RLF-report includes: recording the RSSI information and/or the CO information to a radio link failure report parameter (VarRLF-report) variable in response to triggering recording failure information to the VarRLF-report variable; and reporting the RLF-report to the network-side device in response to triggering the RLF-report, in which the RLF-report carries the RSSI information and/or the CO information recorded in the VarRLF-report variable.

Further, in an embodiment of the present invention, a triggering condition for triggering recording the failure information to the VarRLF-report variable includes at least one of: a handover failure; or a radio link failure (RLF).

Further, in an embodiment of the present invention, a triggering condition for reporting the RLF-report includes at least one of: a master cell group media access control (MCG MAC) random access; a primary cell (PCell) beam recovery failure; a PCell T310 expiry; a PCell T312 expiry; a master cell group radio link control (MCG RLC) reaching a maximum number of retransmissions; a consistent uplink LBT detection failure occurred on an MCG MAC; or a backhaul radio link failure indication.

Further, in an embodiment of the present invention, reporting the RLF-report to the network-side device includes: reporting the RLF-report to the network-side device, in which an RSSI measurement result information element (MeasResultForRSSI IE) in the RLF-report carries the RSSI information and/or the CO information.

Illustratively, in an embodiment of the present invention, the method further includes: recording a measurement identifier (measId) in a new radio RLF-report IE (NR-RLF-report IE) in an RLF-report IE in a case that it is determined that a report configuration (reportConfig) associated with the measId is configured with a configuration for measuring an RSSI report (MeasRSSI-reportConfig) and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channel occupancy threshold (channelOccupancyThreshold) among all sampling values received during the reportInterval before the terminal device detects the failure moment.

Further, in an embodiment of the present invention, the method further includes at least one of: recording a measId and RSSI information and/or CO information associated with an MCG in response to triggering the RLF-report; or recording a measId and RSSI information and/or CO information associated with an SCG in response to triggering the RLF-report.

Further, in an embodiment of the present invention, the method further includes: reporting the RLF-report to the network-side device, in which the RLF-report carries network capability information, and the network capability information is used to indicate a capability of the terminal device to support recording and reporting the RSSI information and/or the CO information in the RLF-report.

In summary, in the embodiments of the present invention, the RLF-report is reported to the network-side device in response to triggering the RLF-report. The RLF-report carries the received signal strength indicator (RSSI) information and/or the channel occupancy (CO) information. In the embodiments of the present invention, the RSSI information and/or the CO information may be reported to the network-side device in response to triggering the RLF-report, so that the network-side device determines a channel condition based on the RSSI information and/or the CO information, thereby avoiding a situation where the channel condition cannot be determined. The present invention provides a processing method for a "reporting" situation to provide the RSSI information and/or the CO information to improve an accuracy and convenience for channel condition confirmation.

FIG. 2 is a schematic flowchart of a reporting method provided in an embodiment of the present invention. The method is performed by a terminal device. As shown in FIG. 2, the method may include the following steps.

In step 201, the RSSI information and/or the CO information is recorded to a radio link failure report parameter (VarRLF-report) variable in response to triggering recording failure information to the VarRLF-report variable.

In step 202, the RLF-report is reported to the network-side device in response to triggering the RLF-report. The RLF-report carries the RSSI information and/or the CO information recorded in the VarRLF-report variable.

In an embodiment of the present invention, a triggering condition for triggering recording the failure information to the VarRLF-report variable includes at least one of: a handover failure; or a radio link failure (RLF).

Further, in an embodiment of the present invention, the terminal device may, for example, record the failure information to the VarRLF-report variable in response to the handover failure. For example, the terminal device may also record the failure information to the VarRLF-report variable in response to the RLF.

Further, in an embodiment of the present invention, a triggering condition for reporting the RLF-report includes at least one of: a master cell group media access control (MCG MAC) random access; a primary cell (PCell) beam recovery failure; a PCell T310 expiry; a PCell T312 expiry; a master cell group radio link control (MCG RLC) reaching a maximum number of retransmissions; a consistent uplink LBT detection failure occurred on an MCG MAC; or a backhaul radio link failure indication.

Further, in an embodiment of the present invention, for example, the terminal device may report the RLF-report to the network-side device in response to the MCG MAC random access.

In summary, in the embodiments of the present invention, the RLF-report is reported to the network-side device in response to triggering the RLF-report. The RLF-report carries the received signal strength indicator (RSSI) information and/or the channel occupancy (CO) information. In the embodiments of the present invention, the RSSI information and/or the CO information may be reported to the network-side device in response to triggering the RLF-report, so that the network-side device determines the channel condition based on the RSSI information and/or the CO information, thereby avoiding the situation where the channel condition cannot be determined. Embodiments of the present invention specifically describe a scheme for recording the RSSI information and/or the CO information, which may improve an accuracy of recording the RSSI information and/or the CO information. The present invention provides a processing method for the "reporting" situation to provide the RSSI information and/or the CO information to improve the accuracy and the convenience for the channel condition confirmation.

FIG. 3 is a schematic flowchart of a reporting method provided in an embodiment of the present invention. The method is performed by a terminal device. As shown in FIG. 3, the method may include a following step.

In step 301, a radio link failure report (RLF-report) is reported to a network-side device in response to triggering the RLF-report. An RSSI measurement result information element (MeasResultForRSSI IE) in the RLF-report carries the RSSI information and/or the CO information.

In an embodiment of the present invention, a measurement identifier (measId) is recorded in a new radio RLF-report IE (NR-RLF-report IE) in an RLF-report IE in a case that it is determined that a report configuration (reportConfig) associated with the measId is configured with a configuration for measuring an RSSI report (MeasRSSI-reportConfig) and the terminal device has an available RSSI measurement result.

RSSI information corresponding to the measId is set to be a linear average of sampling values received from a lower layer within a time interval (reportInterval) before the terminal device detects a failure moment.

The CO information is set to be a proportion of sampling values greater than a channel occupancy threshold (channelOccupancyThreshold) among all sampling values received during the reportInterval before the terminal device detects the failure moment.

Further, in an embodiment of the present invention, the MeasRSSI-reportConfig is used to instruct the terminal device to perform an RSSI test configuration. The RSSI test configuration includes, but is not limited to, a measurement interval duration, measurement frequency point information, a triggering condition for reporting the RSSI, etc.

Further, in an embodiment of the present invention, the IE (information element) in the NR-RLF-report IE refers to a minimum resource element used to carry control information.

Further, in an embodiment of the present invention, it is also possible for the terminal device to periodically report the RLF-report to the network-side device.

Illustratively, in an embodiment of the present invention, a data type corresponding to the RSSI information is an RSSI range. A data type of the CO information may be, for example, an integer.

In summary, in the embodiments of the present invention, the RLF-report is reported to the network-side device in response to triggering the RLF-report. The RLF-report carries the received signal strength indicator (RSSI) information and/or the channel occupancy (CO) information. In the embodiments of the present invention, the RSSI information and/or the CO information may be reported to the network-side device in response to triggering the RLF-report, so that the network-side device determines the channel condition based on the RSSI information and/or the CO information, thereby avoiding the situation where the channel condition cannot be determined. Embodiments of the present invention specifically disclose a carrying element of the RSSI information and/or the CO information in the RLF-report. The present invention provides a processing method for the "reporting" situation to provide the RSSI information and/or the CO information to improve the accuracy and the convenience for the channel condition confirmation.

FIG. 4 is a schematic flowchart of a reporting method provided in an embodiment of the present invention. The method is performed by a terminal device. As shown in FIG. 4, the method may include the following steps. The terminal device performs one of step 401 and step 402.

In step 401, a measId and RSSI information and/or CO information associated with an MCG are recorded in response to triggering the RLF-report.

In step 402, a measId and RSSI information and/or CO information associated with an SCG are recorded in response to triggering the RLF-report.

In step 403, the RLF-report is reported to the network-side device. The RLF-report carries the received signal strength indicator (RSSI) information and/or the channel occupancy (CO) information.

In an embodiment of the present invention, the terminal device may record the measId and the RSSI information and/or the CO information associated with the MCG in response to triggering the RLF-report. The terminal device may report the RLF-report to the network-side device. The RLF-report carries the received signal strength indicator (RSSI) information and/or the channel occupancy (CO) information.

Further, in an embodiment of the present invention, the terminal device may record the measId and the RSSI information and/or the CO information associated with the SCG in response to triggering the RLF-report. The terminal device may report the RLF-report to the network-side device. The RLF-report carries the received signal strength indicator (RSSI) information and/or the channel occupancy (CO) information.

In summary, in the embodiments of the present invention, the RLF-report is reported to the network-side device in response to triggering the RLF-report. The RLF-report carries the received signal strength indicator (RSSI) information and/or the channel occupancy (CO) information. In the embodiments of the present invention, the RSSI information and/or the CO information may be reported to the network-side device in response to triggering the RLF-report, so that the network-side device determines the channel condition based on the RSSI information and/or the CO information, thereby avoiding the situation where the channel condition cannot be determined. Embodiments of the present invention disclose specific information recorded in response to triggering the RLF-report. The present invention provides the processing method for the "reporting" situation to provide the RSSI information and/or the CO information to improve the accuracy and the convenience for the channel condition confirmation.

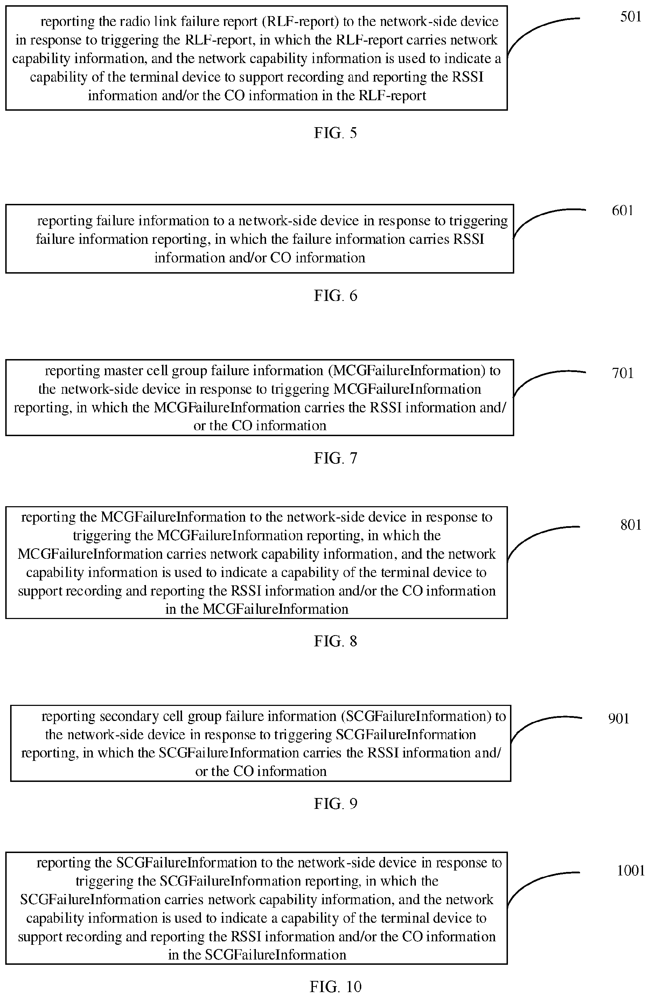

FIG. 5 is a schematic flowchart of a reporting method provided in an embodiment of the present invention. The method is performed by a terminal device. As shown in FIG. 5, the method may include a following step.

In step 501, the RLF-report is reported to the network-side device in response to triggering the RLF-report. The RLF-report carries network capability information, and the network capability information is used to indicate a capability of the terminal device to support recording and reporting the RSSI information and/or the CO information in the RLF-report

In an embodiment of the present invention, the network capability information is used to indicate the capability of the terminal device to support recording and reporting the RSSI information and/or the CO information in the RLF-report. That is, the network capability information is used to indicate whether the terminal device supports recording the RSSI information and/or the CO information in the RLF-report and reporting the RSSI information and/or the CO information in the RLF-report. The network capability information may also vary for different terminal devices.

In summary, in the embodiments of the present invention, the RLF-report is reported to the network-side device in response to triggering the RLF-report. The RLF-report carries the received signal strength indicator (RSSI) information and/or the channel occupancy (CO) information. In the embodiments of the present invention, the RSSI information and/or the CO information may be reported to the network-side device in response to triggering the RLF-report, so that the network-side device determines the channel condition based on the RSSI information and/or the CO information, thereby avoiding the situation where the channel condition cannot be determined. Embodiments of the present invention specifically disclose reporting the network capability information to the network-side device to improve an accuracy of reporting the RSSI information and/or the CO information. The present invention provides the processing method for the "reporting" situation to provide the RSSI information and/or the CO information to improve the accuracy and the convenience for the channel condition confirmation.

FIG. 6 is a schematic flowchart of a reporting method provided in an embodiment of the present invention. The method is performed by a terminal device. As shown in FIG. 6, the method may include a following step.

In step 601, failure information is reported to a network-side device in response to triggering failure information reporting. The failure information carries RSSI information and/or CO information.

In an embodiment of the present invention, reporting the failure information to the network-side device in response to triggering the failure information reporting includes: reporting master cell group failure information (MCGFailureInformation) to the network-side device in response to triggering MCGFailureInformation reporting, in which the MCGFailureInformation carries the RSSI information and/or the CO information.

Further, in an embodiment of the present invention, a triggering condition for reporting the MCGFailureInformation includes at least one of: an MCG MAC random access; a PCell beam recovery failure; a PCell T310 expiry; a PCell T312 expiry; an MCG RLC reaching a maximum number of retransmissions; a consistent uplink LBT detection failure occurred on an MCG MAC; or a backhaul radio link failure indication.

Illustratively, in an embodiment of the present invention, the method further includes at least one of: recording a measId and RSSI information and/or CO information associated with an MCG in response to triggering the MCGFailureInformation reporting; or recording a measId and RSSI information and/or CO information associated with an SCG in response to triggering the MCGFailureInformation reporting.

Further, in an embodiment of the present invention, the method further includes: reporting the MCGFailureInformation to the network-side device, in which the MCGFailureInformation carries network capability information, and the network capability information is used to indicate a capability of the terminal device to support recording and reporting the RSSI information and/or the CO information in the MCGFailureInformation.

Further, in an embodiment of the present invention, reporting the failure information to the network-side device in response to triggering the failure information reporting includes: reporting secondary cell group failure information (SCGFailureInformation) to the network-side device in response to triggering SCGFailureInformation reporting, in which the SCGFailureInformation carries the RSSI information and/or the CO information.

Furthermore, in an embodiment of the present invention, a triggering condition for reporting the SCGFailureInformation includes at least one of: a PCell T310 expiry; a PCell T312 expiry; a secondary cell group media access control (SCG MAC) random access; a secondary cell group radio link control (SCG RLC) reaching a maximum number of retransmissions; a consistent uplink LBT detection failure occurred on a secondary cell group; a backhaul radio link failure indication in the secondary cell group; a reconfiguration of a secondary cell group synchronization failure; or detecting a beam failure of a primary secondary cell (PSCell) when the secondary cell group is deactivated.

Illustratively, in an embodiment of the present invention, the method further includes at least one of: recording a measId and RSSI information and/or CO information associated with an MCG in response to triggering the SCGFailureInformation reporting; or recording a measId and RSSI information and/or CO information associated with an SCG in response to triggering the SCGFailureInformation reporting.

Further, in an embodiment of the present invention, the method further includes: reporting the SCGFailureInformation to the network-side device, in which the SCGFailureInformation carries network capability information, and the network capability information is used to indicate a capability of the terminal device to support recording and reporting the RSSI information and/or the CO information in the SCGFailureInformation.

Furthermore, in an embodiment of the present invention, reporting the failure information to the network-side device in response to triggering the failure information reporting includes: reporting failure information (FailureInformation) to the network-side device in response to triggering FailureInformation reporting, in which the FailureInformation carries the RSSI information and/or the CO information.

Illustratively, in an embodiment of the present invention, a triggering condition for reporting the failure information includes at least one of: detecting an RLC bearer failure; or detecting a dual active protocol stack (DAPS) handover failure.

Further, in an embodiment of the present invention, the method further includes at least one of: recording a measId and RSSI information and/or CO information associated with an MCG in response to triggering the FailureInformation reporting; or recording a measId and RSSI information and/or CO information associated with an SCG in response to triggering the FailureInformation reporting.

Further, in an embodiment of the present invention, the method further includes: reporting the FailureInformation to the network-side device, in which the FailureInformation carries network capability information, and the network capability information is used to indicate a capability of the terminal device to support recording and reporting the RSSI information and/or the CO information in the FailureInformation.

Furthermore, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

In summary, in the embodiments of the present invention, the failure information is reported to the network-side device in response to triggering the failure information reporting. The failure information carries the RSSI information and/or the CO information. In the embodiments of the present invention, the RSSI information and/or the CO information may be reported to the network-side device in response to triggering the failure information reporting, so that the network-side device determines the channel condition based on the RSSI information and/or the CO information, thereby avoiding the situation where the channel condition cannot be determined. Embodiments of the present invention provide the processing method for a "reporting" situation to provide the RSSI information and/or the CO information to improve the accuracy and the convenience for the channel condition confirmation.

FIG. 7 is a schematic flowchart of a reporting method provided in an embodiment of the present invention. The method is performed by a terminal device. As shown in FIG. 7, the method may include a following step.

In step 701, master cell group failure information (MCGFailureInformation) is reported to the network-side device in response to triggering MCGFailureInformation reporting. The MCGFailureInformation carries the RSSI information and/or the CO information.

In an embodiment of the present invention, a triggering condition for reporting the MCGFailureInformation includes at least one of: an MCG MAC random access; a PCell beam recovery failure; a PCell T310 expiry; a PCell T312 expiry; an MCG RLC reaching a maximum number of retransmissions; a consistent uplink LBT detection failure occurred on an MCG MAC; or a backhaul radio link failure indication.

Illustratively, in an embodiment of the present invention, the MCGFailureInformation is used to indicate failure information of the terminal device to reside in a primary cell group. The MCGFailureInformation does not specifically refer to certain fixed failure information. For example, when a failure time point of the primary cell group changes, the MCGFailureInformation may change accordingly. For example, when a primary cell identifier included in the primary cell group changes, the MCGFailureInformation may change accordingly.

Further, in an embodiment of the present invention, the method further includes at least one of: recording a measId and RSSI information and/or CO information associated with an MCG in response to triggering the MCGFailureInformation reporting; or recording a measId and RSSI information and/or CO information associated with an SCG in response to triggering the MCGFailureInformation reporting.

Further, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

In summary, in the embodiments of the present invention, the MCGFailureInformation is reported to the network-side device in response to triggering the MCGFailureInformation reporting. The MCGFailureInformation carries the RSSI information and/or the CO information. In the embodiments of the present invention, the RSSI information and/or the CO information may be reported to the network-side device in response to triggering the MCGFailureInformation reporting, so that the network-side device determines the channel condition based on the RSSI information and/or the CO information, thereby avoiding the situation where the channel condition cannot be determined. Embodiments of the present invention provide the processing method for the "reporting" situation to provide the RSSI information and/or the CO information to improve the accuracy and the convenience for the channel condition confirmation.

FIG. 8 is a schematic flowchart of a reporting method provided in an embodiment of the present invention. The method is performed by a terminal device. As shown in FIG. 8, the method may include a following step.

In step 801, the MCGFailureInformation is reported to the network-side device in response to triggering the MCGFailureInformation reporting. The MCGFailureInformation carries network capability information, and the network capability information is used to indicate a capability of the terminal device to support recording and reporting the RSSI information and/or the CO information in the MCGFailureInformation.

In an embodiment of the present invention, the network capability information is used to indicate the capability of the terminal device to support recording and reporting the RSSI information and/or the CO information in the MCGFailureInformation. That is, the network capability information is used to indicate whether the terminal device supports recording the RSSI information and/or the CO information in the MCGFailureInformation and reporting the RSSI information and/or the CO information in the MCGFailureInformation. The network capability information does not specifically refer to certain fixed information. For example, when capabilities of the terminal devices to support recording and reporting the RSSI information and/or the CO information in the MCGFailureInformation are different, the network capability may change accordingly.

In summary, in the embodiments of the present invention, the MCGFailureInformation is reported to the network-side device in response to triggering the MCGFailureInformation reporting. The MCGFailureInformation carries the RSSI information and/or the CO information. In the embodiments of the present invention, the RSSI information and/or the CO information may be reported to the network-side device in response to triggering the MCGFailureInformation reporting, so that the network-side device determines the channel condition based on the RSSI information and/or the CO information, thereby avoiding the situation where the channel condition cannot be determined. Embodiments of the present invention disclose reporting the network capability information to the network-side device to improve the accuracy of reporting the RSSI information and/or the CO information. Embodiments of the present invention provide the processing method for the "reporting" situation to provide the RSSI information and/or the CO information to improve the accuracy and the convenience for the channel condition confirmation.

FIG. 9 is a schematic flowchart of a reporting method provided in an embodiment of the present invention. The method is performed by a terminal device. As shown in FIG. 9, the method may include a following step.

In step 901, secondary cell group failure information (SCGFailureInformation) is reported to the network-side device in response to triggering SCGFailureInformation reporting. The SCGFailureInformation carries the RSSI information and/or the CO information.

In an embodiment of the present invention, a triggering condition for reporting the SCGFailureInformation includes at least one of: a PCell T310 expiry; a PCell T312 expiry; a secondary cell group media access control (SCG MAC) random access; a secondary cell group radio link control (SCG RLC) reaching a maximum number of retransmissions; a consistent uplink LBT detection failure occurred on a secondary cell group; a backhaul radio link failure indication in the secondary cell group; a reconfiguration of a secondary cell group synchronization failure; or detecting a beam failure of a primary secondary cell (PSCell) when the secondary cell group is deactivated.

Further, in an embodiment of the present invention, the method further includes at least one of: recording a measId and RSSI information and/or CO information associated with an MCG in response to triggering the SCGFailureInformation reporting; or recording a measId and RSSI information and/or CO information associated with an SCG in response to triggering the SCGFailureInformation reporting.

Further, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

In summary, in the embodiments of the present invention, the SCGFailureInformation is reported to the network-side device in response to triggering the SCGFailureInformation reporting. The SCGFailureInformation carries the RSSI information and/or the CO information. In embodiments of the present invention, the RSSI information and/or the CO information may be reported to the network-side device in response to triggering the SCGFailureInformation reporting, so that the network-side device determines the channel condition based on the RSSI information and/or the CO information, thereby avoiding the situation where the channel condition cannot be determined. Embodiments of the present invention provide the processing method for the "reporting" situation to provide the RSSI information and/or the CO information to improve the accuracy and the convenience for the channel condition confirmation.

FIG. 10 is a schematic flowchart of a reporting method provided in an embodiment of the present invention. The method is performed by a terminal device. As shown in FIG. 10, the method may include a following step.

In step 1001, the SCGFailureInformation is reported to the network-side device in response to triggering the SCGFailureInformation reporting. The SCGFailureInformation carries network capability information, and the network capability information is used to indicate a capability of the terminal device to support recording and reporting the RSSI information and/or the CO information in the SCGFailureInformation.

In an embodiment of the present invention, the network capability information is used to indicate the capability of the terminal device to support recording and reporting the RSSI information and/or the CO information in the SCGFailureInformation. That is, the network capability information is used to indicate whether the terminal device supports recording the RSSI information and/or the CO information in the SCGFailureInformation and reporting the RSSI information and/or the CO information in the SCGFailureInformation. The network capability information does not specifically refer to certain fixed information. For example, the network capability information that the terminal device supports recording and reporting the RSSI information and/or the CO information in the SCGFailureInformation is different from network capability information that the terminal device does not support recording and reporting the RSSI information and/or the CO information in the SCGFailureInformation.

In summary, in the embodiments of the present invention, the SCGFailureInformation is reported to the network-side device in response to triggering the SCGFailureInformation reporting. The SCGFailureInformation carries the RSSI information and/or the CO information. In the embodiments of the present invention, the RSSI information and/or the CO information may be reported to the network-side device in response to triggering the SCGFailureInformation reporting, so that the network-side device determines the channel condition based on the RSSI information and/or the CO information, thereby avoiding the situation where the channel condition cannot be determined. Embodiments of the present invention disclose reporting the network capability information to the network-side device to improve the accuracy of reporting the RSSI information and/or the CO information. Embodiments of the present invention provide the processing method for the "reporting" situation to provide the RSSI information and/or the CO information to improve the accuracy and the convenience for the channel condition confirmation.

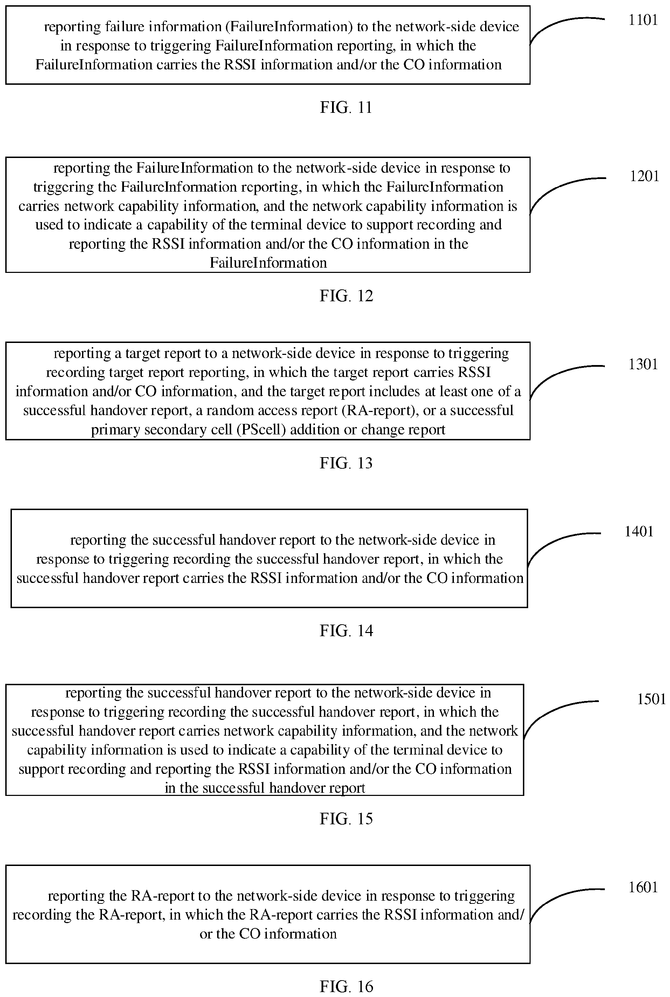

FIG. 11 is a schematic flowchart of a reporting method provided in an embodiment of the present invention. The method is performed by a terminal device. As shown in FIG. 11, the method may include a following step.

In step 1101, failure information (FailureInformation) is reported to the network-side device in response to triggering FailureInformation reporting. The FailureInformation carries the RSSI information and/or the CO information.

In an embodiment of the present invention, a triggering condition for reporting the failure information includes at least one of: detecting an RLC bearer failure; or detecting a dual active protocol stack (DAPS) handover failure.

Illustratively, in an embodiment of the present invention, when the RLC bearer failure is detected, the terminal device may report the FailureInformation to the network-side device.

Illustratively, in an embodiment of the present invention, when the DAPS handover failure is detected, the terminal device may report the FailureInformation to the network-side device.

Further, in an embodiment of the present invention, the method further includes at least one of: recording a measId and RSSI information and/or CO information associated with an MCG in response to triggering the FailureInformation reporting; or recording a measId and RSSI information and/or CO information associated with an SCG in response to triggering the FailureInformation reporting.

Further, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

In summary, in the embodiments of the present invention, the FailureInformation is reported to the network-side device in response to triggering the FailureInformation reporting. The FailureInformation carries the RSSI information and/or the CO information. In the embodiments of the present invention, the RSSI information and/or the CO information may be reported to the network-side device in response to triggering the FailureInformation reporting, so that the network-side device determines the channel condition based on the RSSI information and/or the CO information, thereby avoiding the situation where the channel condition cannot be determined. Embodiments of the present invention provide the processing method for the "reporting" situation to provide the RSSI information and/or the CO information to improve the accuracy and the convenience for the channel condition confirmation.

FIG. 12 is a schematic flowchart of a reporting method provided in an embodiment of the present invention. The method is performed by a terminal device. As shown in FIG. 12, the method may include a following step.

In step 1201, the FailureInformation is reported to the network-side device in response to triggering the FailureInformation reporting. The FailureInformation carries network capability information, and the network capability information is used to indicate a capability of the terminal device to support recording and reporting the RSSI information and/or the CO information in the FailureInformation.

In an embodiment of the present invention, the network capability information is used to indicate the capability of the terminal device to support recording and reporting the RSSI information and/or the CO information in the FailureInformation. That is, the network capability information is used to indicate whether the terminal device supports recording the RSSI information and/or the CO information in the FailureInformation and reporting the RSSI information and/or the CO information in the FailureInformation. The network capability information does not specifically refer to certain fixed information. For example, the network capability information that the terminal device supports recording and reporting the RSSI information and/or the CO information in the FailureInformation is different from network capability information that the terminal device does not support recording and reporting the RSSI information and/or the CO information in the FailureInformation.

In summary, in the embodiments of the present invention, the FailureInformation is reported to the network-side device in response to triggering the FailureInformation reporting. The FailureInformation carries the RSSI information and/or the CO information. In the embodiments of the present invention, the RSSI information and/or the CO information may be reported to the network-side device in response to triggering the FailureInformation reporting, so that the network-side device determines the channel condition based on the RSSI information and/or the CO information, thereby avoiding the situation where the channel condition cannot be determined. Embodiments of the present invention disclose reporting the network capability information to the network-side device to improve the accuracy of reporting the RSSI information and/or the CO information. Embodiments of the present invention provide the processing method for the "reporting" situation to provide the RSSI information and/or the CO information to improve the accuracy and the convenience for the channel condition confirmation.

FIG. 13 is a schematic flowchart of a reporting method provided in an embodiment of the present invention. The method is performed by a terminal device. As shown in FIG. 13, the method may include a following step.

In step 1301, a target report is reported to a network-side device in response to triggering recording target report reporting. The target report carries RSSI information and/or CO information, and the target report includes at least one of a successful handover report, a random access report (RA-report), or a successful primary secondary cell (PScell) addition or change report.

In an embodiment of the present invention, reporting the target report to the network-side device in response to triggering recording the target report reporting includes: reporting the successful handover report to the network-side device in response to triggering recording the successful handover report, in which the successful handover report carries the RSSI information and/or the CO information.

Further, in an embodiment of the present invention, a triggering condition for reporting the successful handover report to the network-side device includes at least one of: a first ratio of a T304 elapsed time to a first configured time exceeding a first threshold; a second ratio of a T310 elapsed time to a second configured time exceeding a second threshold; a third ratio of a T312 elapsed time to a third configured time exceeding a third threshold; or an RLF occurred in a source cell during a dual active protocol stack (DAPS) handover.

Further, in an embodiment of the present invention, the method further includes at least one of: recording a measId and RSSI information and/or CO information associated with an MCG in response to triggering recording the successful handover report; or recording a measId and RSSI information and/or CO information associated with an SCG in response to triggering recording the successful handover report.

Further, in an embodiment of the present invention, the method further includes: reporting the successful handover report to the network-side device, in which the successful handover report carries network capability information, and the network capability information is used to indicate a capability of the terminal device to support recording and reporting the RSSI information and/or the CO information in the successful handover report.

Further, in an embodiment of the present invention, reporting the target report to the network-side device in response to triggering recording the target report reporting includes: reporting the RA-report to the network-side device in response to triggering recording RA-report, in which the RA-report carries the RSSI information and/or the CO information.

Further, in an embodiment of the present invention, a triggering condition for reporting the random access report (RA-report) to the network-side device includes at least one of: successfully executing a 4-step or 2-step random access; or successfully completing or failing an on-demand system information (SI) acquisition process.

Further, in an embodiment of the present invention, the method further includes at least one of: recording a measId and RSSI information and/or CO information associated with a first cell group in response to triggering recording the RA-report, in which the first cell group is a cell group associated with a random access, and the first cell group includes an MCG or an SCG; or recording a measId and RSSI information and/or CO information of a second cell group in response to triggering recording the RA-report, in which the second cell group is a cell group associated with a random access and is different from the first cell group, and the second cell group includes an MCG or an SCG.

Further, in an embodiment of the present invention, the method further includes: reporting the RA-report to the network-side device, in which the RA-report carries network capability information, and the network capability information is used to indicate a capability of the terminal device to support recording and reporting the RSSI information and/or the CO information in the RA-report.

Further, in an embodiment of the present invention, reporting the target report to the network-side device in response to triggering recording the target report reporting includes: reporting the successful PScell addition or change report to the network-side device in response to triggering recording successful PScell addition or change report, in which the successful PScell addition or change report carries the RSSI information and/or the CO information.

Further, in an embodiment of the present invention, a triggering condition for reporting the successful primary secondary cell (PScell) addition or change report to the network-side device includes at least one of: a fourth ratio of a T304 elapsed time of PScell to a fourth configured time exceeding a fourth threshold; a fifth ratio of a T310 elapsed time of PScell to a fifth configured time exceeding a fifth threshold; or a sixth ratio of a T312 elapsed time of PScell to a sixth configured time exceeding a sixth threshold.

Further, in an embodiment of the present invention, the method further includes at least one of: recording a measId and RSSI information and/or CO information associated with an MCG in response to triggering recording the successful PScell addition or change report; or recording a measId and RSSI information and/or CO information associated with an SCG in response to triggering recording the successful PScell addition or change report.

Further, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

Further, in an embodiment of the present invention, the method further includes: reporting the successful PScell addition or change report to the network-side device, in which the successful PScell addition or change report carries network capability information, and the network capability information is used to indicate a capability of the terminal device to support recording and reporting the RSSI information and/or the CO information in the successful PScell addition or change report.

In summary, in the embodiments of the present invention, the target report is reported to the network-side device in response to triggering recording the target report reporting. The target report carries the RSSI information and/or the CO information, and the target report includes at least one of the successful handover report, the random access report (RA-report), or the successful primary secondary cell (PScell) addition or change report. In the embodiments of the present invention, the target report reporting is recorded, and the RSSI information and/or the CO information may be reported to the network-side device, so that the network-side device determines the channel condition based on the RSSI information and/or the CO information, thereby avoiding the situation where the channel condition cannot be determined. Embodiments of the present invention provide the processing method for the "reporting" situation to provide the RSSI information and/or the CO information to improve the accuracy and the convenience for the channel condition confirmation.

FIG. 14 is a schematic flowchart of a reporting method provided in an embodiment of the present invention. The method is performed by a terminal device. As shown in FIG. 14, the method may include a following step.

In step 1401, the successful handover report is reported to the network-side device in response to triggering recording the successful handover report. The successful handover report carries the RSSI information and/or the CO information.

In an embodiment of the present invention, a triggering condition for reporting the successful handover report to the network-side device includes at least one of: a first ratio of a T304 elapsed time to a first configured time exceeding a first threshold; a second ratio of a T310 elapsed time to a second configured time exceeding a second threshold; a third ratio of a T312 elapsed time to a third configured time exceeding a third threshold; or an RLF occurred in a source cell during a dual active protocol stack (DAPS) handover.

In an embodiment of the present invention, wording "first" is only used to distinguish from the same attribute information, and the wording "first" does not specifically refer to a certain fixed value. For example, the first configured time refers to a configured time corresponding to T304. The first configured time is used to distinguish from other configured times, and does not specifically limit the first configured time as a certain fixed time.

Further, in an embodiment of the present invention, the first ratio refers only to a ratio of the T304 elapsed time to the first configured time, and does not specifically refer to a certain fixed ratio. For example, when the T304 elapsed time or the first configured time changes, the first ratio may change accordingly.

Further, in an embodiment of the present invention, the second ratio refers only to a ratio of the T304 elapsed time to the second configured time, and does not specifically refer to a certain fixed ratio. For example, when the T310 elapsed time or the second configured time changes, the second ratio may change accordingly.

Further, in an embodiment of the present invention, the third ratio refers only to a ratio of the T304 elapsed time to the third configured time, and does not specifically refer to a certain fixed ratio. For example, when the T312 elapsed time or the third configured time changes, the third ratio may change accordingly.

Further, in an embodiment of the present invention, the method further includes at least one of: recording a measId and RSSI information and/or CO information associated with an MCG in response to triggering recording the successful handover report; or recording a measId and RSSI information and/or CO information associated with an SCG in response to triggering recording the successful handover report.

Further, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

In summary, in the embodiments of the present invention, the successful handover report is reported to the network-side device in response to triggering recording the successful handover report. The successful handover report carries the RSSI information and/or the CO information. In the embodiments of the present invention, the RSSI information and/or the CO information may be reported to the network-side device in response to triggering recording the successful handover report, so that the network-side device determines the channel condition based on the RSSI information and/or the CO information, thereby avoiding the situation where the channel condition cannot be determined. Embodiments of the present invention provide the processing method for the "reporting" situation to provide the RSSI information and/or the CO information to improve the accuracy and the convenience for the channel condition confirmation.

FIG. 15 is a schematic flowchart of a reporting method provided in an embodiment of the present invention. The method is performed by a terminal device. As shown in FIG. 15, the method may include a following step.

In step 1501, the successful handover report is reported to the network-side device in response to triggering recording the successful handover report. The successful handover report carries network capability information, and the network capability information is used to indicate a capability of the terminal device to support recording and reporting the RSSI information and/or the CO information in the successful handover report.

In an embodiment of the present invention, the network capability information is used to indicate the capability of the terminal device to support recording and reporting the RSSI information and/or the CO information in the successful handover report. That is, the network capability information is used to indicate whether the terminal device supports recording the RSSI information and/or the CO information in the successful handover report and reporting the RSSI information and/or the CO information in the successful handover report. The network capability information does not specifically refer to certain fixed information. For example, the network capability information that the terminal device supports recording and reporting the RSSI information and/or the CO information in the successful handover report is different from network capability information that the terminal device does not support recording and reporting the RSSI information and/or the CO information in the successful handover report.

In summary, in the embodiments of the present invention, the successful handover report is reported to the network-side device in response to triggering recording the successful handover report. The successful handover report carries the RSSI information and/or the CO information. In embodiments of the present invention, the RSSI information and/or the CO information may be reported to the network-side device in response to triggering recording the successful handover report, so that the network-side device determines the channel condition based on the RSSI information and/or the CO information, thereby avoiding the situation where the channel condition cannot be determined. Embodiments of the present invention disclose reporting the network capability information to the network-side device to improve the accuracy of reporting the RSSI information and/or the CO information. Embodiments of the present invention provide the processing method for the "reporting" situation to provide the RSSI information and/or the CO information to improve the accuracy and the convenience for the channel condition confirmation.

FIG. 16 is a schematic flowchart of a reporting method provided in an embodiment of the present invention. The method is performed by a terminal device. As shown in FIG. 16, the method may include a following step.

In step 1601, the RA-report is reported to the network-side device in response to triggering recording the RA-report. The RA-report carries the RSSI information and/or the CO information.

In an embodiment of the present invention, a triggering condition for reporting the random access report (RA-report) to the network-side device includes at least one of: successfully executing a 4-step or 2-step random access; or successfully completing or failing an on-demand system information (SI) acquisition process.

Further, in an embodiment of the present invention, the method further includes at least one of: recording a measId and RSSI information and/or CO information associated with a first cell group in response to triggering recording the RA-report, in which the first cell group is a cell group associated with a random access, and the first cell group includes an MCG or an SCG; or recording a measId and RSSI information and/or CO information of a second cell group in response to triggering recording the RA-report, in which the second cell group is a cell group associated with a random access and is different from the first cell group, and the second cell group includes an MCG or an SCG.

Illustratively, in an embodiment of the present invention, the first cell group does not specifically refer to a certain fixed cell group, and the first in the first cell group is only used to distinguish the first cell group from the second cell group as different cell groups.

Further, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

In summary, in the embodiments of the present invention, the RA-report is reported to the network-side device in response to triggering recording the RA-report. The RA-report carries the RSSI information and/or the CO information. In embodiments of the present invention, the RSSI information and/or the CO information may be reported to the network-side device in response to triggering recording the RA-report, so that the network-side device determines the channel condition based on the RSSI information and/or the CO information, thereby avoiding the situation where the channel condition cannot be determined. Embodiments of the present invention provide the processing method for the "reporting" situation to provide the RSSI information and/or the CO information to improve the accuracy and the convenience for the channel condition confirmation.

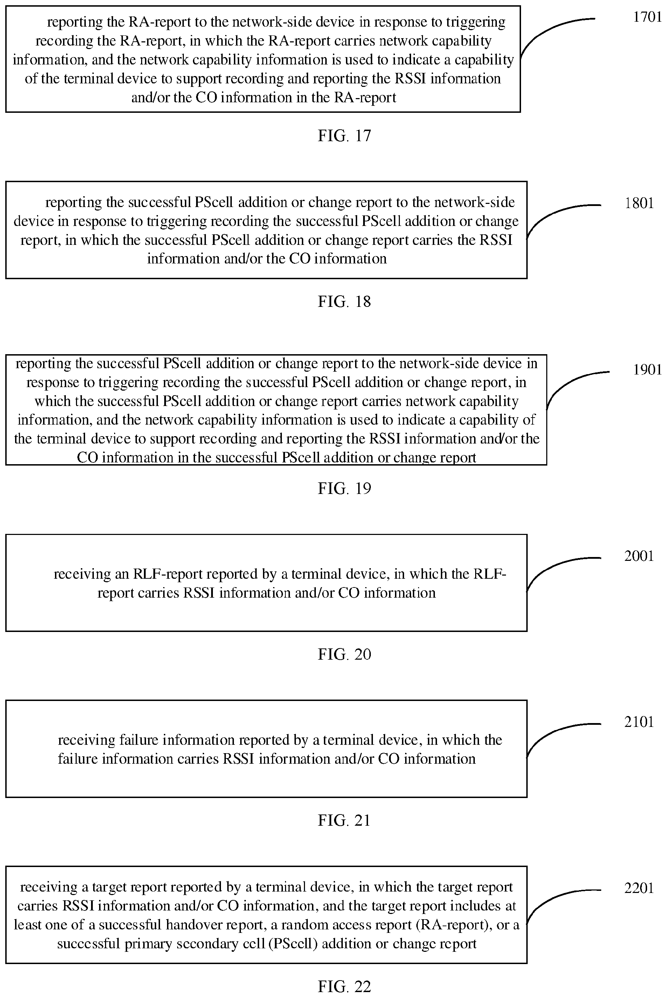

FIG. 17 is a schematic flowchart of a reporting method provided in an embodiment of the present invention. The method is performed by a terminal device. As shown in FIG. 17, the method may include a following step.

In step 1701, the RA-report is reported to the network-side device in response to triggering recording the RA-report. The RA-report carries network capability information, and the network capability information is used to indicate a capability of the terminal device to support recording and reporting the RSSI information and/or the CO information in the RA-report.

In an embodiment of the present invention, the network capability information is used to indicate the capability of the terminal device to support recording and reporting the RSSI information and/or the CO information in the RA-report. That is, the network capability information is used to indicate whether the terminal device supports recording the RSSI information and/or the CO information in the RA-report and reporting the RSSI information and/or the CO information in the RA-report. The network capability information does not specifically refer to certain fixed information. For example, the network capability information that the terminal device supports recording and reporting the RSSI information and/or the CO information in the RA-report is different from network capability information that the terminal device does not support recording and reporting the RSSI information and/or the CO information in the RA-report.

In summary, in the embodiments of the present invention, the RA-report is reported to the network-side device in response to triggering recording the RA-report. The RA-report carries the RSSI information and/or the CO information. In the embodiments of the present invention, the RSSI information and/or the CO information may be reported to the network-side device in response to triggering recording the RA-report, so that the network-side device determines the channel condition based on the RSSI information and/or the CO information, thereby avoiding the situation where the channel condition cannot be determined. Embodiments of the present invention disclose reporting the network capability information to the network-side device to improve the accuracy of reporting the RSSI information and/or the CO information. Embodiments of the present invention provide the processing method for the "reporting" situation to provide the RSSI information and/or the CO information to improve the accuracy and the convenience for the channel condition confirmation.

FIG. 18 is a schematic flowchart of a reporting method provided in an embodiment of the present invention. The method is performed by a terminal device. As shown in FIG. 18, the method may include a following step.

In step 1801, the successful PScell addition or change report is reported to the network-side device in response to triggering recording the successful PScell addition or change report. The successful PScell addition or change report carries the RSSI information and/or the CO information.

In an embodiment of the present invention, a triggering condition for reporting the successful primary secondary cell (PScell) addition or change report to the network-side device includes at least one of: a fourth ratio of a T304 elapsed time of PScell to a fourth configured time exceeding a fourth threshold; a fifth ratio of a T310 elapsed time of PScell to a fifth configured time exceeding a fifth threshold; or a sixth ratio of a T312 elapsed time of PScell to a sixth configured time exceeding a sixth threshold.

In an embodiment of the present invention, wording "fourth" is only used to distinguish from the same attribute information, and the wording "fourth" does not specifically refer to a certain fixed value. For example, the fourth configured time refers to a configured time corresponding to the PScell T304. The wording fourth in the fourth configured time is used to distinguish from other configured times, and does not specifically limit the fourth configured time as a certain fixed time.

Further, in an embodiment of the present invention, the fourth ratio refers only to a ratio of the T304 elapsed time of PScell to the fourth configured time, and does not specifically refer to a certain fixed ratio. For example, when the T304 elapsed time of PScell or the fourth configuration time changes, the fourth ratio may change accordingly.

Further, in an embodiment of the present invention, the fifth ratio refers only to a ratio of the T310 elapsed time of the PScell to the fifth configured time, and does not specifically refer to a certain fixed ratio. For example, when the T310 elapsed time of PScell or the fifth configuration time changes, the fifth ratio may change accordingly.

Further, in an embodiment of the present invention, the sixth ratio refers only to a ratio of the T312 elapsed time of PScell to the sixth configured time, and does not specifically refer to a certain fixed ratio. For example, when the T312 elapsed time of PScell or the sixth configuration time changes, the sixth ratio may change accordingly.

Further, in an embodiment of the present invention, the method further includes at least one of: recording a measId and RSSI information and/or CO information associated with an MCG in response to triggering recording the successful PScell addition or change report; or recording a measId and RSSI information and/or CO information associated with an SCG in response to triggering recording the successful PScell addition or change report.

Further, in an embodiment of the present invention, the method further includes: recording the measId in an NR-RLF-report IE in an RLF-report IE in a case that it is determined that a reportConfig associated with the measId is configured with an MeasRSSI-reportConfig and the terminal device has an available RSSI measurement result; setting RSSI information corresponding to the measId to be a linear average of sampling values received from a lower layer within a time interval (reportInterval) before the terminal device detects a failure moment; and setting the CO information to be a proportion of sampling values greater than a channelOccupancyThreshold among all sampling values received during the reportInterval before the terminal device detects the failure moment.

In summary, in the embodiments of the present invention, the successful PScell addition or change report is reported to the network-side device in response to triggering recording the successful PScell addition or change report. The successful PScell addition or change report carries the RSSI information and/or the CO information. In the embodiments of the present invention, the RSSI information and/or the CO information may be reported to the network-side device in response to triggering recording the successful PScell addition or change report, so that the network-side device determines the channel condition based on the RSSI information and/or the CO information, thereby avoiding the situation where the channel condition cannot be determined. Embodiments of the present invention provide the processing method for the "reporting" situation to provide the RSSI information and/or the CO information to improve the accuracy and the convenience for the channel condition confirmation.

FIG. 19 is a schematic flowchart of a reporting method provided in an embodiment of the present invention. The method is performed by a terminal device. As shown in FIG. 19, the method may include a following step.

In step 1901, the successful PScell addition or change report is reported to the network-side device in response to triggering recording the successful PScell addition or change report. The successful PScell addition or change report carries network capability information, and the network capability information is used to indicate a capability of the terminal device to support recording and reporting the RSSI information and/or the CO information in the successful PScell addition or change report.

In an embodiment of the present invention, the network capability information is used to indicate the capability of the terminal device to support recording and reporting the RSSI information and/or the CO information in the successful PScell addition or change report. That is, the network capability information is used to indicate whether the terminal device supports recording and reporting the RSSI information and/or the CO information in the successful PScell addition or change report. The network capability information does not specifically refer to certain fixed information. For example, the network capability information that the terminal device supports recording and reporting the RSSI information and/or the CO information in the successful PScell addition or change report is different from network capability information that the terminal device does not support recording and reporting the RSSI information and/or the CO information in the successful PScell addition or change report.

In summary, in the embodiments of the present invention, the successful PScell addition or change report is reported to the network-side device in response to triggering recording the successful PScell addition or change report. The successful PScell addition or change report carries the RSSI information and/or the CO information. In the embodiments of the present invention, the RSSI information and/or the CO information may be reported to the network-side device in response to triggering recording the successful PScell addition or change report, so that the network-side device determines the channel condition based on the RSSI information and/or the CO information, thereby avoiding the situation where the channel condition cannot be determined. Embodiments of the present invention disclose reporting the network capability information to the network-side device to improve the accuracy of reporting the RSSI information and/or the CO information. Embodiments of the present invention provide the processing method for the "reporting" situation to provide the RSSI information and/or the CO information to improve the accuracy and the convenience for the channel condition confirmation.

FIG. 20 is a schematic flowchart of a reporting method provided in an embodiment of the present invention. The method is performed by a network-side device. As shown in FIG. 20, the method may include a following step.

In step 2001, an RLF-report reported by a terminal device is received. The RLF-report carries RSSI information and/or CO information.

In an embodiment of the present invention, the RLF-report carries a VarRLF-report variable, and the VarRLF-report variable carries the RSSI information and/or the CO information.

Illustratively, in an embodiment of the present invention, the RLF-report carries network capability information, and the network capability information is used to indicate a capability of the terminal device to support recording and reporting the RSSI information and/or the CO information in the RLF-report.

Other detailed introductions about the step 2001 may be referred to the description of the above embodiments, and embodiments of the present invention will not be repeated here.

In summary, in the embodiments of the present invention, the RLF-report reported by the terminal device is received. The RLF-report carries the RSSI information and/or the CO information. In the embodiments of the present invention, the network-side device may receive the RSSI information and/or the CO information to determine the channel condition based on the RSSI information and/or the CO information, thereby avoiding the situation where the channel condition cannot be determined. The present invention provide the processing method for the "reporting" situation to provide the RSSI information and/or the CO information to improve the accuracy and the convenience for the channel condition confirmation.

FIG. 21 is a schematic flowchart of a reporting method provided in an embodiment of the present invention. The method is performed by a network-side device. As shown in FIG. 21, the method may include a following step.

In step 2101, failure information reported by a terminal device is received. The failure information carries RSSI information and/or CO information.

In an embodiment of the present invention, receiving the failure information reported by the terminal device includes: receiving MCGFailureInformation reported by the terminal device, in which the MCGFailureInformation carries the RSSI information and/or the CO information.

Further, in an embodiment of the present invention, receiving the failure information reported by the terminal device includes: receiving SCGFailureInformation reported by the terminal device, in which the SCGFailureInformation carries the RSSI information and/or the CO information.

Illustratively, in an embodiment of the present invention, the SCGFailureInformation carries network capability information, and the network capability information is used to indicate a capability of the terminal device to support recording and reporting the RSSI information and/or the CO information in the SCGFailureInformation.

Furthermore, in an embodiment of the present invention, receiving the failure information reported by the terminal device includes: receiving FailureInformation reported by the terminal device, in which the FailureInformation carries the RSSI information and/or the CO information.

Further, in an embodiment of the present invention, the FailureInformation carries network capability information, and the network capability information is used to indicate a capability of the terminal device to support recording and reporting the RSSI information and/or the CO information in the FailureInformation.

Other detailed introductions about the step 2101 may be referred to the description of the above embodiments, and embodiments of the present invention will not be repeated here.

In summary, in the embodiments of the present invention, the failure information reported by the terminal device is received. The failure information carries the RSSI information and/or the CO information. In the embodiments of the present invention, the network-side device may receive the failure information. Since the failure information carries the RSSI information and/or the CO information, the network-side device may receive the RSSI information and/or the CO information to determine the channel condition based on the RSSI information and/or the CO information, thereby avoiding the situation where the channel condition cannot be determined. The present invention provide the processing method for the "reporting" situation to provide the RSSI information and/or the CO information to improve the accuracy and the convenience for the channel condition confirmation.

FIG. 22 is a schematic flowchart of a reporting method provided in an embodiment of the present invention. The method is performed by a network-side device. As shown in FIG. 22, the method may include a following step.

In step 2201, a target report reported by a terminal device is received. The target report carries RSSI information and/or CO information, and the target report includes at least one of a successful handover report, a random access report (RA-report), or a successful primary secondary cell (PScell) addition or change report.

Illustratively, in an embodiment of the present invention, the target report carries network capability information, and the network capability information is used to indicate a capability of the terminal device to support recording and reporting the RSSI information and/or the CO information in the target report.

Other detailed introductions about the step 2201 may be referred to the description of the above embodiments, and embodiments of the present invention will not be repeated here.

In summary, in the embodiments of the present invention, the target report reported by the terminal device is received. The target report carries the RSSI information and/or the CO information. In the embodiments of the present invention, the network-side device may receive the target report. Since the target report carries the RSSI information and/or the CO information, the network-side device may receive the RSSI information and/or the CO information to determine the channel condition based on the RSSI information and/or the CO information, thereby avoiding the situation where the channel condition cannot be determined. The present invention provide the processing method for the "reporting" situation to provide the RSSI information and/or the CO information to improve the accuracy and the convenience for the channel condition confirmation.

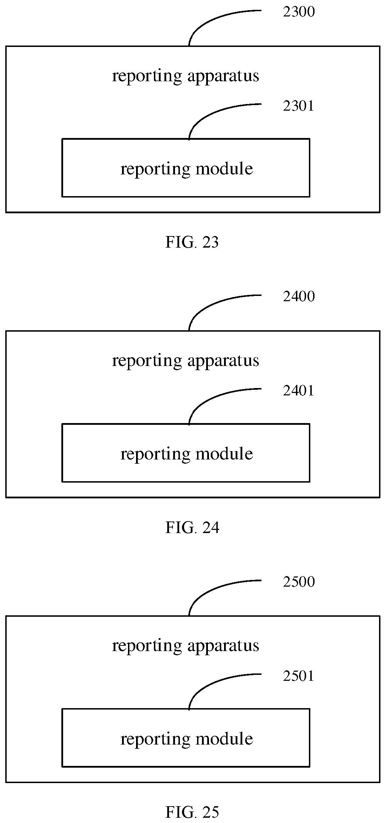

FIG. 23 is a schematic block diagram of a reporting apparatus provided in an embodiment of the present invention. As shown in FIG. 23, the apparatus 2300 may include: a reporting module 2301 configured to report a radio link failure report (RLF-report) to a network-side device in response to triggering the RLF-report, in which the RLF-report carries received signal strength indicator (RSSI) information and/or channel occupancy (CO) information.

In summary, in the reporting apparatus of embodiments of the present invention, the RLF-report is reported to the network-side device in response to triggering the RLF-report. The RLF-report carries the received signal strength indicator (RSSI) information and/or the channel occupancy (CO) information. In the embodiments of the present invention, the RSSI information and/or the CO information may be reported to the network-side device in response to triggering the RLF-report, so that the network-side device determines the channel condition based on the RSSI information and/or the CO information, thereby avoiding the situation where the channel condition cannot be determined. The present invention provides the processing apparatus for the "reporting" situation to provide the RSSI information and/or the CO information to improve the accuracy and the convenience for the channel condition confirmation.

Optionally, in an embodiment of the present invention, the reporting module 2301 is configured to report the RLF-report to the network-side device in response to triggering the RLF-report, specifically to: record the RSSI information and/or the CO information to a radio link failure report parameter (VarRLF-report) variable in response to triggering recording failure information to the VarRLF-report variable; and report the RLF-report to the network-side device in response to triggering the RLF-report, in which the RLF-report carries the RSSI information and/or the CO information recorded in the VarRLF-report variable.

Optionally, in an embodiment of the present invention, a triggering condition for triggering recording the failure information to the VarRLF-report variable includes at least one of: a handover failure; or a radio link failure (RLF).

Optionally, in an embodiment of the present invention, a triggering condition for reporting the RLF-report includes at least one of: a master cell group media access control (MCG MAC) random access; a primary cell (PCell) beam recovery failure; a PCell T310 expiry; a PCell T312 expiry; a master cell group radio link control (MCG RLC) reaching a maximum number of retransmissions; a consistent uplink LBT detection failure occurred on an MCG MAC; or a backhaul radio link failure indication.

Optionally, in an embodiment of the present invention, the reporting module 2301 is configured to report the RLF-report to the network-side device, specifically to: report the RLF-report to the network-side device, in which an RSSI measurement result information element (MeasResultForRSSI IE) in the RLF-report carries the RSSI information and/or the CO information.

Optionally, in an embodiment of the present invention, the reporting module 2301 is further configured to record a measurement identifier (measId) in a new radio RLF-report IE (NR-RLF-report IE) in an RLF-report IE in a case that it is determined that a report configuration (reportConfig) associated with the measId is configured with a configuration for measuring an RSSI report (MeasRSSI-reportConfig) and the terminal device has an available RSSI measurement result; set RSSI information corresponding to the measId to be a linear average of sampling values received from a lower layer within a time interval (reportInterval) before the terminal device detects a failure moment; and set the CO information to be a proportion of sampling values greater than a channel occupancy threshold (channelOccupancyThreshold) among all sampling values received during the reportInterval before the terminal device detects the failure moment.

Optionally, in an embodiment of the present invention, the reporting module 2301 is further configured to perform at least one of: recording a measId and RSSI information and/or CO information associated with an MCG in response to triggering the RLF-report; or recording a measId and RSSI information and/or CO information associated with an secondary cell group (SCG) in response to triggering the RLF-report.

Optionally, in an embodiment of the present invention, the reporting module 2301 further report the RLF-report to the network-side device. The RLF-report carries network capability information, and the network capability information is used to indicate a capability of the terminal device to support recording and reporting the RSSI information and/or the CO information in the RLF-report.

FIG. 24 is a schematic block diagram of a reporting apparatus provided in an embodiment of the present invention. As shown in FIG. 24, the apparatus 2400 may include: a reporting module 2401 configured to report failure information to a network-side device in response to triggering failure information reporting, in which the failure information carries RSSI information and/or CO information.

In summary, in the reporting apparatus of embodiments of the present invention, the failure information is reported to the network-side device in response to triggering the failure information report. The failure information carries the RSSI information and/or the CO information. In the embodiments of the present invention, the RSSI information and/or the CO information may be reported to the network-side device in response to triggering the failure information report, so that the network-side device determines the channel condition based on the RSSI information and/or the CO information, thereby avoiding the situation where the channel condition cannot be determined. The present invention provides the processing apparatus for the "reporting" situation to provide the RSSI information and/or the CO information to improve the accuracy and the convenience for the channel condition confirmation.

Optionally, in an embodiment of the present invention, the reporting module 2401 is configured to report the failure information to the network-side device in response to triggering the failure information reporting, specifically to: report master cell group failure information (MCGFailureInformation) to the network-side device in response to triggering MCGFailureInformation reporting, in which the MCGFailureInformation carries the RSSI information and/or the CO information.

Optionally, in an embodiment of the present invention, a triggering condition for reporting the MCGFailureInformation includes at least one of: an MCG MAC random access; a PCell beam recovery failure; a PCell T310 expiry; a PCell T312 expiry; an MCG RLC reaching a maximum number of retransmissions; a consistent uplink LBT detection failure occurred on an MCG MAC; or a backhaul radio link failure indication.

Optionally, in an embodiment of the present invention, the reporting module 2401 is further configured to perform at least one of: recording a measId and RSSI information and/or CO information associated with an MCG in response to triggering the MCGFailureInformation reporting; or recording a measId and RSSI information and/or CO information associated with an SCG in response to triggering the MCGFailureInformation reporting.

Optionally, in an embodiment of the present invention, the reporting module 2401 is further configured to report the MCGFailureInformation to the network-side device. The MCGFailureInformation carries network capability information, and the network capability information is used to indicate a capability of the terminal device to support recording and reporting the RSSI information and/or the CO information in the MCGFailureInformation.

Optionally, in an embodiment of the present invention, the reporting module 2401 is used to report the failure information to the network-side device in response to triggering the failure information reporting, specifically to: report secondary cell group failure information (SCGFailureInformation) to the network-side device in response to triggering SCGFailureInformation reporting, in which the SCGFailureInformation carries the RSSI information and/or the CO information.

Optionally, in an embodiment of the present invention, a triggering condition for reporting the SCGFailureInformation includes at least one of: a PCell T310 expiry; a PCell T312 expiry; a secondary cell group media access control (SCG MAC) random access; a secondary cell group radio link control (SCG RLC) reaching a maximum number of retransmissions; a consistent uplink LBT detection failure occurred on a secondary cell group; a backhaul radio link failure indication in the secondary cell group; a reconfiguration of a secondary cell group synchronization failure; or detecting a beam failure of a primary secondary cell (PSCell) when the secondary cell group is deactivated.

Optionally, in an embodiment of the present invention, the reporting module 2401 is further configured to perform at least one of: recording a measId and RSSI information and/or CO information associated with an MCG in response to triggering the SCGFailureInformation reporting; or recording a measId and RSSI information and/or CO information associated with an SCG in response to triggering the SCGFailureInformation reporting.

Optionally, in an embodiment of the present invention, the reporting module 2401 is further configured to report the SCGFailureInformation to the network-side device. The SCGFailureInformation carries network capability information, and the network capability information is used to indicate a capability of the terminal device to support recording and reporting the RSSI information and/or the CO information in the SCGFailureInformation.

Optionally, in an embodiment of the present invention, the reporting module 2401 is configured to report the failure information to the network-side device in response to triggering the failure information reporting, specifically to: report failure information (FailureInformation) to the network-side device in response to triggering FailureInformation reporting, in which the FailureInformation carries the RSSI information and/or the CO information.

Optionally, in an embodiment of the present invention, a triggering condition for reporting the failure information includes at least one of: detecting an RLC bearer failure; or detecting a dual active protocol stack (DAPS) handover failure.

Optionally, in an embodiment of the present invention, the reporting module 2401 is further configured to perform at least one of: recording a measId and RSSI information and/or CO information associated with an MCG in response to triggering the FailureInformation reporting; or recording a measId and RSSI information and/or CO information associated with an SCG in response to triggering the FailureInformation reporting.

Optionally, in an embodiment of the present invention, the reporting module 2401 is further configured to report the FailureInformation to the network-side device. The FailureInformation carries network capability information, and the network capability information is used to indicate a capability of the terminal device to support recording and reporting the RSSI information and/or the CO information in the FailureInformation.

Optionally, in an embodiment of the present invention, the reporting module 2401 is further configured to record the measId in an NR-RLF-report IE in an RLF-report IE in a case that it is determined that a reportConfig associated with the measId is configured with an MeasRSSI-reportConfig and the terminal device has an available RSSI measurement result; set RSSI information corresponding to the measId to be a linear average of sampling values received from a lower layer within a time interval (reportInterval) before the terminal device detects a failure moment; and set the CO information to be a proportion of sampling values greater than a channelOccupancyThreshold among all sampling values received during the reportInterval before the terminal device detects the failure moment.

FIG. 25 is a schematic block diagram of a reporting apparatus provided in an embodiment of the present invention. As shown in FIG. 25, the apparatus 2500 may include: a reporting module 2501 configured to report a target report to a network-side device in response to triggering recording target report reporting, in which the target report carries RSSI information and/or CO information, and the target report includes at least one of a successful handover report, a random access report (RA-report), or a successful primary secondary cell (PScell) addition or change report.

In summary, in the reporting apparatus of embodiments of the present invention, the target report is reported to the network-side device in response to triggering recording the target report reporting. The target report carries the received signal strength indicator (RSSI) information and/or the channel occupancy (CO) information. In the embodiments of the present invention, the RSSI information and/or the CO information may be reported to the network-side device in response to triggering recording the target report reporting, so that the network-side device determines the channel condition based on the RSSI information and/or the CO information, thereby avoiding the situation where the channel condition cannot be determined. The present invention provides the processing apparatus for the "reporting" situation to provide the RSSI information and/or the CO information to improve the accuracy and the convenience for the channel condition confirmation.

Optionally, in an embodiment of the present invention, the reporting module 2501 is configured to report the target report to the network-side device in response to triggering recording the target report reporting, specifically to: report the successful handover report to the network-side device in response to triggering recording the successful handover report, in which the successful handover report carries the RSSI information and/or the CO information.

Optionally, in an embodiment of the present invention, a triggering condition for reporting the successful handover report to the network-side device includes at least one of: a first ratio of a T304 elapsed time to a first configured time exceeding a first threshold; a second ratio of a T310 elapsed time to a second configured time exceeding a second threshold; a third ratio of a T312 elapsed time to a third configured time exceeding a third threshold; or an RLF occurred in a source cell during a dual active protocol stack (DAPS) handover.

Further, in an embodiment of the present invention, the reporting module 2501 is further configured to perform at least one of: recording a measId and RSSI information and/or CO information associated with an MCG in response to triggering recording the successful handover report; or recording a measId and RSSI information and/or CO information associated with an SCG in response to triggering recording the successful handover report.

Optionally, in an embodiment of the present invention, the reporting module 2501 is further configured to report the successful handover report to the network-side device. The successful handover report carries network capability information, and the network capability information is used to indicate a capability of the terminal device to support recording and reporting the RSSI information and/or the CO information in the successful handover report.

Optionally, in an embodiment of the present invention, the reporting module 2501 is configured to report the target report to the network-side device in response to triggering recording the target report reporting, specifically to: report the RA-report to the network-side device in response to triggering recording the RA-report, in which the RA-report carries the RSSI information and/or the CO information.

Optionally, in an embodiment of the present invention, a triggering condition for reporting the random access report (RA-report) to the network-side device includes at least one of: successfully executing a 4-step or 2-step random access; or successfully completing or failing an on-demand system information (SI) acquisition process.

Optionally, in an embodiment of the present invention, the reporting module 2501 is further configured to perform at least one of: recording a measId and RSSI information and/or CO information associated with a first cell group in response to triggering recording the RA-report, in which the first cell group is a cell group associated with a random access, and the first cell group includes an MCG or an SCG; or recording a measId and RSSI information and/or CO information of a second cell group in response to triggering recording the RA-report, in which the second cell group is a cell group associated with a random access and is different from the first cell group, and the second cell group includes an MCG or an SCG.

Optionally, in an embodiment of the present invention, the reporting module 2501 is further configured to report the RA-report to the network-side device. The RA-report carries network capability information, and the network capability information is used to indicate a capability of the terminal device to support recording and reporting the RSSI information and/or the CO information in the RA-report.

Optionally, in an embodiment of the present invention, the reporting module 2501 is configured to report the target report to the network-side device in response to triggering recording the target report reporting, specifically to: report the successful PScell addition or change report to the network-side device in response to triggering recording the successful PScell addition or change report, in which the successful PScell addition or change report carries the RSSI information and/or the CO information.

Optionally, in an embodiment of the present invention, the reporting module 2501 is configured to a triggering condition for reporting the successful primary secondary cell (PScell) addition or change report to the network-side device includes at least one of: a fourth ratio of a T304 elapsed time of PScell to a fourth configured time exceeding a fourth threshold; a fifth ratio of a T310 elapsed time of PScell to a fifth configured time exceeding a fifth threshold; or a sixth ratio of a T312 elapsed time of PScell to a sixth configured time exceeding a sixth threshold.

Optionally, in an embodiment of the present invention, the reporting module 2501 is further configured to perform at least one of: recording a measId and RSSI information and/or CO information associated with an MCG in response to triggering recording the successful PScell addition or change report; or recording a measId and RSSI information and/or CO information associated with an SCG in response to triggering recording the successful PScell addition or change report.

Optionally, in an embodiment of the present invention, the reporting module 2501 is further configured to: record the measId in an NR-RLF-report IE in an RLF-report IE in a case that it is determined that a reportConfig associated with the measId is configured with an MeasRSSI-reportConfig and the terminal device has an available RSSI measurement result; set RSSI information corresponding to the measId to be a linear average of sampling values received from a lower layer within a time interval (reportInterval) before the terminal device detects a failure moment; and set the CO information to be a proportion of sampling values greater than a channelOccupancyThreshold among all sampling values received during the reportInterval before the terminal device detects the failure moment.

Optionally, in an embodiment of the present invention, the reporting module 2501 is further configured to report the successful PScell addition or change report to the network-side device. The successful PScell addition or change report carries network capability information, and the network capability information is used to indicate a capability of the terminal device to support recording and reporting the RSSI information and/or the CO information in the successful PScell addition or change report.

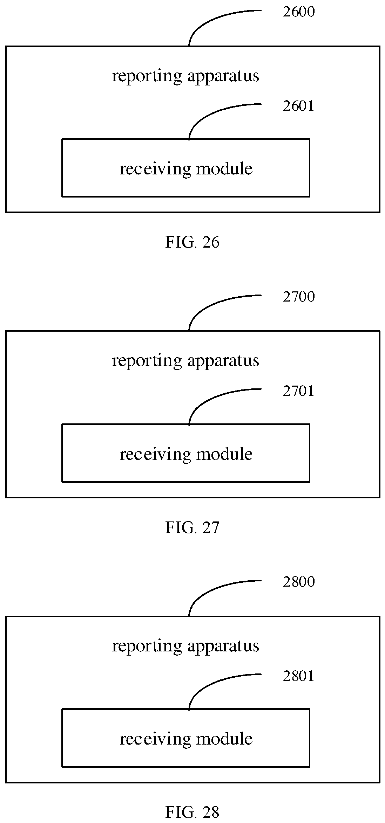

FIG. 26 is a schematic block diagram of a reporting apparatus provided in an embodiment of the present invention. As shown in FIG. 26, the apparatus 2600 may include: a receiving module 2601 configured to receive an RLF-report reported by a terminal device, in which the RLF-report carries RSSI information and/or CO information.

In summary, in the reporting apparatus of embodiments of the present invention, the RLF-report reported by the terminal device is received. The RLF-report carries the RSSI information and/or the CO information. In the embodiments of the present invention, the receiving module may receive the RSSI information and/or the CO information to determine the channel condition based on the RSSI information and/or the CO information, thereby avoiding the situation where the channel condition cannot be determined. The present invention provides the processing apparatus for the "reporting" situation to provide the RSSI information and/or the CO information to improve the accuracy and the convenience for the channel condition confirmation.

Optionally, in an embodiment of the present invention, the RLF-report carries a VarRLF-report variable, and the VarRLF-report variable carries the RSSI information and/or the CO information.

Optionally, in an embodiment of the present invention, the RLF-report carries network capability information, and the network capability information is used to indicate a capability of the terminal device to support recording and reporting the RSSI information and/or the CO information in the RLF-report.

FIG. 27 is a schematic block diagram of a reporting apparatus provided in an embodiment of the present invention. As shown in FIG. 27, the apparatus 2700 may include: a receiving module 2701 configured to receive failure information reported by a terminal device, in which the failure information carries RSSI information and/or CO information.

In summary, in the reporting apparatus of embodiments of the present invention, the failure information reported by the terminal device is received. The failure information carries the RSSI information and/or the CO information. In the embodiments of the present invention, the receiving module may receive the failure information. Since the failure information carries the RSSI information and/or the CO information, the receiving module may receive the RSSI information and/or the CO information to determine the channel condition based on the RSSI information and/or the CO information, thereby avoiding the situation where the channel condition cannot be determined. The present invention provides the processing apparatus for the "reporting" situation to provide the RSSI information and/or the CO information to improve the accuracy and the convenience for the channel condition confirmation.

Optionally, in an embodiment of the present invention, the receiving module 2701 is configured to receive the failure information reported by the terminal device, specifically to: receive MCGFailureInformation reported by the terminal device, in which the MCGFailureInformation carries the RSSI information and/or the CO information.

Optionally, in an embodiment of the present invention, the MCGFailureInformation carries network capability information, and the network capability information is used to indicate a capability of the terminal device to support recording and reporting the RSSI information and/or the CO information in the MCGFailureInformation.

Further, in an embodiment of the present invention, the receiving module 2701 is configured to receive the failure information reported by the terminal device, specifically to: receive SCGFailureInformation reported by the terminal device, in which the SCGFailureInformation carries the RSSI information and/or the CO information.

Optionally, in an embodiment of the present invention, the SCGFailureInformation carries network capability information, and the network capability information is used to indicate a capability of the terminal device to support recording and reporting the RSSI information and/or the CO information in the SCGFailureInformation.

Optionally, in an embodiment of the present invention, the receiving module 2701 is configured to receive the failure information reported by the terminal device, including: receiving FailureInformation reported by the terminal device, in which the FailureInformation carries the RSSI information and/or the CO information.

Further, in an embodiment of the present invention, the FailureInformation carries network capability information, and the network capability information is used to indicate a capability of the terminal device to support recording and reporting the RSSI information and/or the CO information in the FailureInformation.

FIG. 28 is a schematic block diagram of a reporting apparatus provided in an embodiment of the present invention. As shown in FIG. 28, the apparatus 2800 may include: a receiving module 2801 configured to receive a target report reported by a terminal device, in which the target report carries RSSI information and/or CO information, and the target report includes at least one of a successful handover report, a random access report (RA-report), or a successful primary secondary cell (PScell) addition or change report.

Optionally, in an embodiment of the present invention, the target report carries network capability information, and the network capability information is used to indicate a capability of the terminal device to support recording and reporting the RSSI information and/or the CO information in the target report.

In summary, in the reporting apparatus of embodiments of the present invention, the target report reported by the terminal device is received. The target report carries the RSSI information and/or the CO information. In the embodiments of the present invention, the receiving module may receive the target report. Since the target report carries the RSSI information and/or the CO information, the receiving module may receive the RSSI information and/or the CO information to determine the channel condition based on the RSSI information and/or the CO information, thereby avoiding the situation where the channel condition cannot be determined. The present invention provides the processing apparatus for the "reporting" situation to provide the RSSI information and/or the CO information to improve the accuracy and the convenience for the channel condition confirmation.

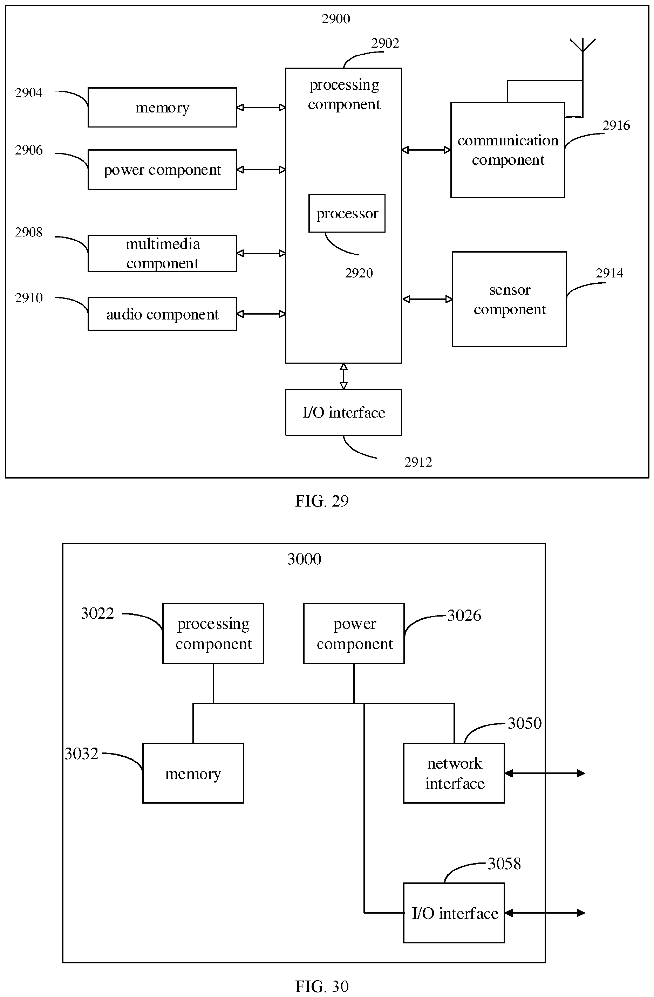

FIG. 29 is a block diagram of a terminal device (user equipment, UE) 2900 provided in an embodiment of the present invention. For example, the UE 2900 may be a mobile phone, a computer, a digital broadcast terminal device, a messaging device, a game console, a tablet device, a medical device, a fitness device, a personal digital assistant, or the like.

Referring to FIG. 29, the UE 2900 may include at least one of the following components: a processing component 2902, a memory 2904, a power component 2906, a multimedia component 2908, an audio component 2910, an input/output (I/O) interface 2912, a sensor component 2914, and a communication component 2916.

The processing component 2902 typically controls overall operations of the UE 2900, such as the operations associated with display, phone calls, data communications, camera operations, and recording operations. The processing component 2902 may include at least one processors 2920 to execute instructions to perform all or some of the steps in the above-described methods. Moreover, the processing component 2902 may include at least one modules which facilitate the interaction between the processing component 2902 and other components. For instance, the processing component 2902 may include a multimedia module to facilitate the interaction between the multimedia component 2908 and the processing component 2902.

The memory 2904 is configured to store various types of data to support the operation of the UE 2900. Examples of such data include instructions for any applications or methods operated on the UE 2900, contact data, phonebook data, messages, pictures, videos, etc. The memory 2904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2906 provides power to various components of the UE 2900. The power component 2906 may include a power management system, at least one power sources, and any other components associated with the generation, management, and distribution of power in the UE 2900.

The multimedia component 2908 includes a screen providing an output interface between the UE 2900 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensors to sense touches, swipes, and gestures on the touch panel. The touch sensors may not only sense a boundary of a touch or swipe action, but also sense a wake-up time and a pressure associated with the touch or swipe action. In some embodiments, the multimedia component 2908 includes a front camera and/or a rear camera. The front camera and/or the rear camera may receive an external multimedia datum while the UE 2900 is in an operation mode, such as a photographing mode or a video mode. Each of the front camera and the rear camera may be a fixed optical lens system or have focus and optical zoom capability.

The audio component 2910 is configured to output and/or input audio signals. For example, the audio component 2910 includes a microphone (MIC) configured to receive an external audio signal when the UE 2900 is in an operation mode, such as a call mode, a recording mode, and a voice recognition mode. The received audio signal may be further stored in the memory 2904 or transmitted via the communication component 2916. In some embodiments, the audio component 2910 further includes a speaker to output audio signals.

The I/O interface 2912 provides an interface between the processing component 2902 and peripheral interface modules, such as keyboards, click wheels, buttons, and the like. The buttons may include, but are not limited to, a home button, a volume button, a starting button, and a locking button.

The sensor component 2914 includes at least one sensors to provide status assessments of various aspects of the UE 2900. For instance, the sensor component 2914 may detect an open/closed status of the device 2900, relative positioning of components, e.g., the display and the keypad, of the UE 2900. The sensor component 2914 may also detect a change in position of the UE 2900 or a component of the UE 2900, a presence or absence of user contact with the UE 2900, an orientation or an acceleration/deceleration of the UE 2900, and a change in temperature of the UE 2900. The sensor component 2914 may include a proximity sensor configured to detect the presence of nearby objects without any physical contact. The sensor component 2914 may further include a light sensor, such as a CMOS or CCD image sensor, for use in imaging applications. In some embodiments, the sensor component 2914 may further include an accelerometer sensor, a gyroscope sensor, a magnetic sensor, a pressure sensor, or a temperature sensor.

The communication component 2916 is configured to facilitate communication, wired or wireless, between the UE 2900 and other devices. The UE 2900 can access a wireless network based on a communication standard, such as Wi-Fi, 2G, or 3G, or a combination thereof. In an illustrative embodiment, the communication component 2916 receives a broadcast signal or broadcast associated information from an external broadcast management system via a broadcast channel. In an illustrative embodiment, the communication component 2916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 2900 may be implemented with at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

FIG. 30 is a block diagram of a network-side device 3000 provided in an embodiment of the present invention. For example, the network-side device 3000 may be provided as one network-side device. Referring to FIG. 30, the network-side device 3000 includes a processing component 3022, which further includes at least one of processors, and a memory resource represented by a memory 3032 configured to store instructions executable by the processing component 3022, such as application programs. The application programs stored in the memory 3032 may include one or more modules each corresponding to a set of instructions. In addition, the processing component 3022 is configured to execute instructions to perform any of the foregoing methods performed by the network-side device, for example, the method shown in FIG. 1.

The network-side device 3000 may also include a power component 3026 configured to perform the power management of the network-side device 3000, a wired or wireless network interfaces 3050 configured to connect the network-side device 3000 to a network, and an input/output (I/O) interface 3058. The network-side device 3000 may operate based on an operating system stored in the memory 3032, such as Windows Server TM, Mac OS XTM, Unix TM, Linux TM, Free BSDTM, or the like.

In the above embodiments provided by the present invention, the methods provided in embodiments of the present invention are introduced from perspectives of the network-side device and the UE respectively. In order to implement the various functions in the methods provided by the above embodiments of the present invention, the network-side device and the UE may include a hardware structure and a software module, and implement the above functions in a form of the hardware structure, the software module, or the hardware structure plus the software module. A certain function among the above mentioned functions may be implemented in the form of the hardware structure, the software module, or the hardware structure plus the software module.

In the above embodiments provided by the present invention, the methods provided in embodiments of the present invention are introduced from perspectives of the network-side device and the UE respectively. In order to implement the various functions in the methods provided by the above embodiments of the present invention, the network-side device and the UE may include a hardware structure and a software module, and implement the above functions in a form of the hardware structure, the software module, or the hardware structure plus the software module. A certain function among the above mentioned functions may be implemented in the form of the hardware structure, the software module, or the hardware structure plus the software module.

Embodiments of the present invention provide a communication device, which may include a transceiving module and a processing module. The transceiving module may include a sending module and/or a receiving module, the sending module is configured to implement a sending function, and the receiving module is configured to implement a receiving function. The transceiving module may implement the sending function and/or the receiving function.

The communication device may be a terminal device (such as the terminal device in the foregoing method embodiments), may also be a device in the terminal device, and may also be a device that can be used in conjunction with the terminal device. Alternatively, the communication device may be a network device, may also be a device in the network device, and may also be a device that can be used in conjunction with the network device.

Embodiments of the present invention provide a communication device, which may be a network device, may also be a terminal device (such as the terminal device in the foregoing method embodiments), may also be a chip, a chip system, or a processor that supports the network device to implement the above methods, and may also be a chip, a chip system, or a processor that supports the terminal device to implement the above methods. The device may be configured to implement the methods as described in the above method embodiments, and for details, reference may be made to the descriptions in the above method embodiments.

The communications device may include one or more processors. The processor may be a general-purpose processor or a special-purpose processor. For example, it may be a baseband processor or a central processing unit. The baseband processor may be configured to process a communication protocol and communication data, and the central processing unit may be configured to control a communication device (such as a network-side device, a baseband chip, a terminal device, a terminal device chip, a DU or a CU, etc.), execute computer programs, and process data of the computer programs.

Optionally, the communication device may further include one or more memories having stored therein a computer program. The processor executes the computer program, to cause the communication device to implement the methods as described in the above method embodiments. Optionally, the memory may have stored therein data. The communication device and the memory may be provided separately or integrated together.

Optionally, the communication device may further include a transceiver and an antenna. The transceiver may be called a transceiving element, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device may further include one or more interface circuits. The interface circuit is configured to receive a code instruction and transmit the code instruction to the processor. The processor runs the code instruction to enable the communication device to execute the methods as described in the above method embodiments.

The communication device is a terminal device (such as the terminal device in the foregoing method embodiments). The processor is configured to execute the method shown in any one of FIG. 1 to FIG. 4.

The communication device is a network-side device, and the processor is configured to execute the method shown in any one of FIG. 5 to FIG. 7.

In an implementation, the processor may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor may have stored therein a computer program that, when run on the processor, causes the communication device to implement the methods as described in the above method embodiments. The computer program may be embedded in the processor, and in this case, the processor may be implemented by a hardware.

In an implementation, the communication device may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an N-type metal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the terminal device in the foregoing method embodiments), but the scope of the communication device described in the present invention is not limited thereto, and the structure of the communication device may not be limited thereto. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, the chip includes a processor and an interface. In the chip, one or more processors may be provided, and more than one interface may be provided.

Optionally, the chip further includes a memory for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present invention.

The present invention also provides a readable storage medium having stored thereon instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are distinguished only for convenience of description, and are not intended to limit the scope of embodiments of the present invention, and nor are they intended to represent sequential order.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A reporting method, performed by a terminal device, comprising:
reporting a radio link failure report (RLF-report) to a network-side device in response to triggering the RLF-report, wherein the RLF-report carries received signal strength indicator (RSSI) information and/or channel occupancy (CO) information.

2. The method according to claim 1, wherein reporting the RLF-report to the network-side device in response to triggering the RLF-report comprises:
recording the RSSI information and/or the CO information to a radio link failure report parameter (VarRLF-report) variable in response to triggering recording failure information to the VarRLF-report variable; and
reporting the RLF-report to the network-side device in response to triggering the RLF-report, wherein the RLF-report carries the RSSI information and/or the CO information recorded in the VarRLF-report variable.

3. The method according to claim 2, wherein a triggering condition for triggering recording the failure information to the VarRLF-report variable comprises at least one of:
a handover failure; or
a radio link failure (RLF).

4. The method according to claim 1, wherein a triggering condition for reporting the RLF-report comprises at least one of:
a master cell group media access control (MCG MAC) random access;
a primary cell (PCell) beam recovery failure;
a PCell T310 expiry;
a PCell T312 expiry;
a master cell group radio link control (MCG RLC) reaching a maximum number of retransmissions;
a consistent uplink listen before talk (LBT) detection failure occurred on an MCG MAC; or
a backhaul radio link failure indication.

5. The method according to claim 1, wherein reporting the RLF-report to the network-side device comprises:
reporting the RLF-report to the network-side device, wherein an RSSI measurement result information element (MeasResultForRSSI IE) in the RLF-report carries the RSSI information and/or the CO information.

6. The method according to any one of claims 1 to 5, further comprising:
recording a measurement identifier (measId) in a new radio RLF-report IE (NR-RLF-report IE) in an RLF-report IE in a case that it is determined that a report configuration (reportConfig) associated with the measId is configured with a configuration for measuring an RSSI report (MeasRSSI-reportConfig) and the terminal device has an available RSSI measurement result;
setting RSSI information corresponding to the measId to be a linear average of sampling values received from a lower layer within a time interval (reportInterval) before the terminal device detects a failure moment; and
setting the CO information to be a proportion of sampling values greater than a channel occupancy threshold (channelOccupancyThreshold) among all sampling values received during the reportInterval before the terminal device detects the failure moment.

7. The method according to claim 6, further comprising at least one of:
recording a measId and RSSI information and/or CO information associated with an MCG in response to triggering the RLF-report; or
recording a measId and RSSI information and/or CO information associated with an secondary cell group (SCG) in response to triggering the RLF-report.

8. The method according to claim 1, further comprising:
reporting the RLF-report to the network-side device, wherein the RLF-report carries network capability information, and the network capability information is used to indicate a capability of the terminal device to support recording and reporting the RSSI information and/or the CO information in the RLF-report.

9. A reporting method, performed by a terminal device, comprising:
reporting failure information to a network-side device in response to triggering failure information reporting, wherein the failure information carries RSSI information and/or CO information.

10. The method according to claim 9, wherein reporting the failure information to the network-side device in response to triggering the failure information reporting comprises:
reporting master cell group failure information (MCGFailureInformation) to the network-side device in response to triggering MCGFailureInformation reporting, wherein the MCGFailureInformation carries the RSSI information and/or the CO information.

11. The method according to claim 10, wherein a triggering condition for reporting the MCGFailureInformation comprises at least one of:
an MCG MAC random access;
a PCell beam recovery failure;
a PCell T310 expiry;
a PCell T312 expiry;
an MCG RLC reaching a maximum number of retransmissions;
a consistent uplink LBT detection failure occurred on an MCG MAC; or
a backhaul radio link failure indication.

12. The method according to claim 10, further comprising at least one of:
recording a measId and RSSI information and/or CO information associated with an MCG in response to triggering the MCGFailureInformation reporting; or
recording a measId and RSSI information and/or CO information associated with an SCG in response to triggering the MCGFailureInformation reporting.

13. The method according to claim 10, further comprising:
reporting the MCGFailureInformation to the network-side device, wherein the MCGFailureInformation carries network capability information, and the network capability information is used to indicate a capability of the terminal device to support recording and reporting the RSSI information and/or the CO information in the MCGFailureInformation.

14. The method according to claim 9, wherein reporting the failure information to the network-side device in response to triggering the failure information reporting comprises:
reporting secondary cell group failure information (SCGFailureInformation) to the network-side device in response to triggering SCGFailureInformation reporting, wherein the SCGFailureInformation carries the RSSI information and/or the CO information.

15. The method according to claim 14, wherein a triggering condition for reporting the SCGFailureInformation comprises at least one of:
a PCell T310 expiry;
a PCell T312 expiry;
a secondary cell group media access control (SCG MAC) random access;
a secondary cell group radio link control (SCG RLC) reaching a maximum number of retransmissions;
a consistent uplink LBT detection failure occurred on a secondary cell group;
a backhaul radio link failure indication in the secondary cell group;
a reconfiguration of a secondary cell group synchronization failure; or
detecting a beam failure of a primary secondary cell (PSCell) when the secondary cell group is deactivated.

16. The method according to claim 14, further comprising at least one of:
recording a measId and RSSI information and/or CO information associated with an MCG in response to triggering the SCGFailureInformation reporting; or
recording a measId and RSSI information and/or CO information associated with an SCG in response to triggering the SCGFailureInformation reporting.

17. The method according to claim 13, further comprising:
reporting the SCGFailureInformation to the network-side device, wherein the SCGFailureInformation carries network capability information, and the network capability information is used to indicate a capability of the terminal device to support recording and reporting the RSSI information and/or the CO information in the SCGFailureInformation.

18. The method according to claim 9, wherein reporting the failure information to the network-side device in response to triggering the failure information reporting comprises:
reporting failure information (FailureInformation) to the network-side device in response to triggering FailureInformation reporting, wherein the FailureInformation carries the RSSI information and/or the CO information.

19. The method according to claim 18, wherein a triggering condition for reporting the failure information comprises at least one of:
detecting an RLC bearer failure; or
detecting a dual active protocol stack (DAPS) handover failure.

20. The method according to claim 18, further comprising at least one of:
recording a measId and RSSI information and/or CO information associated with an MCG in response to triggering the FailureInformation reporting; or
recording a measId and RSSI information and/or CO information associated with an SCG in response to triggering the FailureInformation reporting.

21. The method according to claim 18, further comprising:
reporting the FailureInformation to the network-side device, wherein the FailureInformation carries network capability information, and the network capability information is used to indicate a capability of the terminal device to support recording and reporting the RSSI information and/or the CO information in the FailureInformation.

22. The method according to any one of claims 9 to 21, further comprising:
recording the measId in an NR-RLF-report IE in an RLF-report IE in a case that it is determined that a reportConfig associated with the measId is configured with an MeasRSSI-reportConfig and the terminal device has an available RSSI measurement result;
setting RSSI information corresponding to the measId to be a linear average of sampling values received from a lower layer within a time interval (reportInterval) before the terminal device detects a failure moment; and
setting the CO information to be a proportion of sampling values greater than a channelOccupancyThreshold among all sampling values received during the reportInterval before the terminal device detects the failure moment.

23. A reporting method, performed by a terminal device, comprising:
reporting a target report to a network-side device in response to triggering recording target report reporting, wherein the target report carries RSSI information and/or CO information, and the target report comprises at least one of a successful handover report, a random access report (RA-report), or a successful primary secondary cell (PScell) addition or change report.

24. The method according to claim 23, wherein reporting the target report to the network-side device in response to triggering recording the target report reporting comprises:
reporting the successful handover report to the network-side device in response to triggering recording the successful handover report, wherein the successful handover report carries the RSSI information and/or the CO information.

25. The method according to claim 24, wherein a triggering condition for reporting the successful handover report to the network-side device comprises at least one of:
a first ratio of a T304 elapsed time to a first configured time exceeding a first threshold;
a second ratio of a T310 elapsed time to a second configured time exceeding a second threshold;
a third ratio of a T312 elapsed time to a third configured time exceeding a third threshold; or
an RLF occurred in a source cell during a dual active protocol stack (DAPS) handover.

26. The method according to claim 24, further comprising at least one of:
recording a measId and RSSI information and/or CO information associated with an MCG in response to triggering recording the successful handover report; or
recording a measId and RSSI information and/or CO information associated with an SCG in response to triggering recording the successful handover report.

27. The method according to claim 24, further comprising:
reporting the successful handover report to the network-side device, wherein the successful handover report carries network capability information, and the network capability information is used to indicate a capability of the terminal device to support recording and reporting the RSSI information and/or the CO information in the successful handover report.

28. The method according to claim 23, wherein reporting the target report to the network-side device in response to triggering recording the target report reporting comprises:
reporting the RA-report to the network-side device in response to triggering recording the RA-report, wherein the RA-report carries the RSSI information and/or the CO information.

29. The method according to claim 28, wherein a triggering condition for reporting the random access report (RA-report) to the network-side device comprises at least one of:
successfully executing a 4-step or 2-step random access; or
successfully completing or failing an on-demand system information (SI) acquisition process.

30. The method according to claim 28, further comprising at least one of:
recording a measId and RSSI information and/or CO information associated with a first cell group in response to triggering recording the RA-report, wherein the first cell group is a cell group associated with a random access, and the first cell group comprises an MCG or an SCG; or
recording a measId and RSSI information and/or CO information of a second cell group in response to triggering recording the RA-report, wherein the second cell group is a cell group associated with a random access and is different from the first cell group, and the second cell group comprises an MCG or an SCG.

31. The method according to claim 28, further comprising:
reporting the RA-report to the network-side device, wherein the RA-report carries network capability information, and the network capability information is used to indicate a capability of the terminal device to support recording and reporting the RSSI information and/or the CO information in the RA-report.

32. The method according to claim 23, wherein reporting the target report to the network-side device in response to triggering recording the target report reporting comprises:
reporting the successful PScell addition or change report to the network-side device in response to triggering recording the successful PScell addition or change report, wherein the successful PScell addition or change report carries the RSSI information and/or the CO information.

33. The method according to claim 30, wherein a triggering condition for reporting the successful primary secondary cell (PScell) addition or change report to the network-side device comprises at least one of:
a fourth ratio of a T304 elapsed time of PScell to a fourth configured time exceeding a fourth threshold;
a fifth ratio of a T310 elapsed time of PScell to a fifth configured time exceeding a fifth threshold; or
a sixth ratio of a T312 elapsed time of PScell to a sixth configured time exceeding a sixth threshold.

34. The method according to claim 32, further comprising at least one of:
recording a measId and RSSI information and/or CO information associated with an MCG in response to triggering recording the successful PScell addition or change report; or
recording a measId and RSSI information and/or CO information associated with an SCG in response to triggering recording the successful PScell addition or change report.

35. The method according to any one of claims 23 to 34, further comprising:
recording the measId in an NR-RLF-report IE in an RLF-report IE in a case that it is determined that a reportConfig associated with the measId is configured with an MeasRSSI-reportConfig and the terminal device has an available RSSI measurement result;
setting RSSI information corresponding to the measId to be a linear average of sampling values received from a lower layer within a time interval (reportInterval) before the terminal device detects a failure moment; and
setting the CO information to be a proportion of sampling values greater than a channelOccupancyThreshold among all sampling values received during the reportInterval before the terminal device detects the failure moment.

36. The method according to claim 32, further comprising:
reporting the successful PScell addition or change report to the network-side device, wherein the successful PScell addition or change report carries network capability information, and the network capability information is used to indicate a capability of the terminal device to support recording and reporting the RSSI information and/or the CO information in the successful PScell addition or change report.

37. A reporting method, performed by a network-side device, comprising:
receiving an RLF-report reported by a terminal device, wherein the RLF-report carries RSSI information and/or CO information.

38. The method according to claim 37, wherein the RLF-report carries a VarRLF-report variable, and the VarRLF-report variable carries the RSSI information and/or the CO information.

39. The method according to claim 37, wherein the RLF-report carries network capability information, and the network capability information is used to indicate a capability of the terminal device to support recording and reporting the RSSI information and/or the CO information in the RLF-report.

40. A reporting method, performed by a network-side device, comprising:
receiving failure information reported by a terminal device, wherein the failure information carries RSSI information and/or CO information.

41. The method according to claim 40, wherein receiving the failure information reported by the terminal device comprises:
receiving MCGFailureInformation reported by the terminal device, wherein the MCGFailureInformation carries the RSSI information and/or the CO information.

42. The method according to claim 41, wherein the MCGFailureInformation carries network capability information, and the network capability information is used to indicate a capability of the terminal device to support recording and reporting the RSSI information and/or the CO information in the MCGFailureInformation.

43. The method according to claim 40, wherein receiving the failure information reported by the terminal device comprises:
receiving SCGFailureInformation reported by the terminal device, wherein the SCGFailureInformation carries the RSSI information and/or the CO information.

44. The method according to claim 43, wherein the SCGFailureInformation carries network capability information, and the network capability information is used to indicate a capability of the terminal device to support recording and reporting the RSSI information and/or the CO information in the SCGFailureInformation.

45. The method according to claim 40, wherein receiving the failure information reported by the terminal device comprises:
receiving FailureInformation reported by the terminal device, wherein the FailureInformation carries the RSSI information and/or the CO information.

46. The method according to claim 45, wherein the FailureInformation carries network capability information, and the network capability information is used to indicate a capability of the terminal device to support recording and reporting the RSSI information and/or the CO information in the FailureInformation.

47. A reporting method, performed by a network-side device, comprising:
receiving a target report reported by a terminal device, wherein the target report carries RSSI information and/or CO information, and the target report comprises at least one of a successful handover report, a random access report (RA-report), or a successful primary secondary cell (PScell) addition or change report.

48. The method according to claim 47, wherein the target report carries network capability information, and the network capability information is used to indicate a capability of the terminal device to support recording and reporting the RSSI information and/or the CO information in the target report.

49. A reporting apparatus, comprising:
a reporting module configured to report a radio link failure report (RLF-report) to a network-side device in response to triggering the RLF-report, wherein the RLF-report carries received signal strength indicator (RSSI) information and/or channel occupancy (CO) information.

50. A reporting apparatus, comprising:
a reporting module configured to report failure information to a network-side device in response to triggering failure information reporting, wherein the failure information carries RSSI information and/or CO information.

51. A reporting apparatus, comprising:
a reporting module configured to report failure information (FailureInformation) to a network-side device in response to triggering FailureInformation reporting, wherein the FailureInformation carries RSSI information and/or CO information.

52. A reporting apparatus, comprising:
a receiving module configured to receive an RLF-report reported by a terminal device, wherein the RLF-report carries RSSI information and/or CO information.

53. A reporting apparatus, comprising:
a receiving module configured to receive failure information reported by a terminal device, wherein the failure information carries RSSI information and/or CO information.

54. A reporting apparatus, comprising:
a receiving module configured to receive a target report reported by a terminal device, wherein the target report carries RSSI information and/or CO information, and the target report comprises at least one of a successful handover report, a random access report (RA-report), or a successful primary secondary cell (PScell) addition or change report.

55. A terminal device, comprising:
a processor; and
a memory having stored therein a computer program,
wherein the processor is configured to execute the computer program stored in the memory, to cause the device to perform the method according to any one of claims 1 to 8.

56. A terminal device, comprising:
a processor; and
a memory having stored therein a computer program,
wherein the processor is configured to execute the computer program stored in the memory, to cause the device to perform the method according to any one of claims 9 to 22.

57. A terminal device, comprising:
a processor; and
a memory having stored therein a computer program,
wherein the processor is configured to execute the computer program stored in the memory, to cause the device to perform the method according to any one of claims 23 to 36.

58. A network-side device, comprising:
a processor; and
a memory having stored therein a computer program,
wherein the processor is configured to execute the computer program stored in the memory, to cause the device to perform the method according to any one of claims 37 to 39.

59. A network-side device, comprising:
a processor; and
a memory having stored therein a computer program,
wherein the processor is configured to execute the computer program stored in the memory, to cause the device to perform the method according to any one of claims 40 to 46.

60. A network-side device, comprising:
a processor; and
a memory having stored therein a computer program,
wherein the processor is configured to execute the computer program stored in the memory, to cause the device to perform the method according to any one of claims 47 to 48.

61. A communication device, comprising:
a processor; and
an interface circuit configured to receive code instructions and transmit them to the processor;
wherein the processor is configured to run the code instructions to perform the method according to any one of claims 1 to 8.

62. A communication device, comprising:
a processor; and
an interface circuit configured to receive code instructions and transmit them to the processor;
wherein the processor is configured to run the code instructions to perform the method according to any one of claims 9 to 22.

63. A communication device, comprising:
a processor; and
an interface circuit configured to receive code instructions and transmit them to the processor;
wherein the processor is configured to run the code instructions to perform the method according to any one of claims 23 to 36.

64. A communication device, comprising:
a processor; and
an interface circuit configured to receive code instructions and transmit them to the processor;
wherein the processor is configured to run the code instructions to perform the method according to any one of claims 37 to 39.

65. A communication device, comprising:
a processor; and
an interface circuit configured to receive code instructions and transmit them to the processor;
wherein the processor is configured to run the code instructions to perform the method according to any one of claims 40 to 46.

66. A communication device, comprising:
a processor; and
an interface circuit configured to receive code instructions and transmit them to the processor;
wherein the processor is configured to run the code instructions to perform the method according to any one of claims 47 to 48.

67. A computer-readable storage medium for storing instructions that, when executed, cause the method according to any one of claims 1 to 8 to be implemented.

68. A computer-readable storage medium for storing instructions that, when executed, cause the method according to any one of claims 9 to 22 to be implemented.

69. A computer-readable storage medium for storing instructions that, when executed, cause the method according to any one of claims 23 to 36 to be implemented.

70. A computer-readable storage medium for storing instructions that, when executed, cause the method according to any one of claims 37 to 39 to be implemented.

71. A computer-readable storage medium for storing instructions that, when executed, cause the method according to any one of claims 40 to 46 to be implemented.

72. A computer-readable storage medium for storing instructions that, when executed, cause the method according to any one of claims 47 to 48 to be implemented.
